# EUROPEAN PATENT SPECIFICATION

(11) **EP 1 917 221 B1**
(45) Date of publication and mention of the grant of the patent: **21.03.2012**
(21) Application number: 06768490.2
(22) Date of filing: 16.05.2006
(51) Int. Cl.: C03C 17/00, C03C 17/42, C08F 292/00, C08K 3/36

(54) **SURFACE MODIFIED INORGANIC MATERIAL AND PRODUCING METHOD THEREOF**
OBERFLÄCHENMODIFIZIERTES ANORGANISCHES MATERIAL UND HERSTELLUNGSVERFAHREN DAFÜR
MATIÈRE INORGANIQUE MODIFIÉE EN SURFACE ET PROCÉDÉ DE PRODUCTION DE CELLE-CI

(30) Priority: 23.08.2005 KR 20050077152; 14.04.2006 KR 20060034139; 14.04.2006 KR 20060034140
(43) Date of publication of application: 07.05.2008
(73) Proprietor: Industry-Academic Cooperation Foundation, Yonsei University, Seodaemun-gu Seoul 120-749 (KR)
(72) Inventor: JUN, Chul-Ho, Seoul, 120-070 (KR); YEON, Ye-Lim, Chungcheongbuk-do, 361-260 (KR); LEE, Ji-Sung, Seoul, 120-113 (KR); PARK, Young-Jun, Seoul, 158-077 (KR)
(74) Representative: Becker, Eberhard
(86) International application number: PCT/KR2006/001819
(87) International publication number: WO 2007/024055

(56) References cited:
- WO-A1-97/25140
- WO-A1-2004/046237
- JP-A- 2004 175 793
- JP-A- 2006 089 588
- KR-B1- 100 178 954
- US-A- 5 523 444
- TOURNE-PETEILH C ET AL: "Synthesis and characterisation of ibuprofen-anchored MCM-41 silica and silica gel" NOUVEAU JOURNAL DE CHIMIE - NEW JOURNAL OF CHEMISTRY, CENTRE NATIONAL DE LA RECHERCHE SCIENTIFIC, PARIS, FR, vol. 27, 2 September 2003 (2003-09-02), pages 1415-1418, XP007901732 ISSN: 0398-9836

## Description

### [Technical Field]

The present invention relates to a surface-modified inorganic material and a preparation method thereof, and more particularly to a surface-modified inorganic material which is obtained by allowing an organosilane compound, having allyl or an allyl derivative and represented by Formula 1, to react with an inorganic material, particularly solid silica or ITO glass, in the presence of an acid and an organic solvent, so as to introduce an organic group into the inorganic material even at room temperature, as well as a preparation method thereof.

### [Background Art]

Covalent bonding of an organic group to the surface of an organic material is considered as the most reliable method of making organic/inorganic hybrid materials. In particular, it is industrially very useful to modify the surface of solid silica or ITO glass by introducing an organic group thereto. The case of silica will now be described by way of example. A silicon atom present on the surface of silica forms a Si-O-Si bond with the silicon atom of an organosilicon compound. Specifically, a Si-OH group on the silica surface reacts with the organosilicon compound, which has a leaving group such as a halide, alkoxy or amino group on the silicon atom thereof, so as to form a Si-O-Si covalent bond. However, the organosilicon compound having the highly active leaving group as described above could not be used in a reaction involving water, because it is highly susceptible to hydrolysis. Particularly, this organic silicon compound had a limitation in that it cannot be purified using a silica gel column in order to remove impurities after the synthesis thereof.

To solve this limitation, a method including the use of an allylsilane organic compound that is relatively stable in water was recently developed, but it has a problem in that it requires high-temperature reflux to conduct the reaction, and thus it is difficult to apply to organosilicon compounds containing thermally sensitive organic functional groups.

A methallyl organosilane compound used in the present invention can be stably used even in water and hydrolysis conditions, can be separated and purified using a silica gel column, and is so stable that it does not require special care, even for storage. This compound has an advantage in that it can be conveniently used even in the presence of thermally sensitive organic compounds or functional groups, because it is activated by the use of a catalyst so that it reacts with the Si-OH group of silica even at room temperature. Particularly, it can be used as a packing material for a chiral separation column that can separate a chiral compound by introducing a chiral organic compound into amorphous silica or mesoporous silica. Also, it can be used in catalyst recovery through immobilization of a ligand for a catalyst.

In addition, it can be used to modify the surface of ITO glass for use in the electronic industry or sensor applications, and thus can be widely applied in solid surface modification reactions and the like.

### [Disclosure]

### [Technical Problem]

The present invention has been made to solve the above-described problems occurring in the prior art, and it is an object of the present invention to provide a surface-modified inorganic material and a preparation method thereof, in which an organosilane compound having allyl or an allyl derivative is allowed to react with an inorganic material such as silica or ITO glass in the presence of an organic solvent and an acid catalyst, such that the organic group can be introduced into the inorganic material even at room temperature.

### [Technical Solution]

In order to achieve the above object, according to the present invention, there is provided a method for modifying the surface of an inorganic material, the method comprising the steps of: 1) purifying an organosilane compound having allyl or an allyl derivative, the compound being represented by Formula 1; and 2) mixing an organic material with the purified organosilane compound, an acid and an organic solvent: 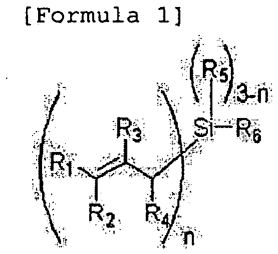 wherein R₁ to R₅ are each individually H or a linear or branched C₁-C₃₀ alkyl group, R₆ is a linear or branched C₁-C₁₈ alkyl group, a linear or branched C₁-C₃₀ aliphatic unsaturated hydrocarbon, a C₁-C₃₀ ring compound, a C₁-C₃₀ aromatic ring compound, or a linear or branched C₁-C₁₈ alkyl group or linear or branched C₁-C₁₈ aliphatic unsaturated hydrocarbon containing at least one functional group selected from the group consisting of halogen, azide, amine, ketone, ether, amide, ester, triazole and isocyanate, and n is an integer ranging from 1 to 3.

Said purification step 1) is preferably conducted using column chromatography, and said mixing step 2) is preferably conducted at 10-30 °C.

As said acid, at least one selected from the group consisting of H₂SO₄, HNO₃, CH₃C₆H₄SO₃ · H₂O, Sc(OTf)₃, In(OTf)₃, Yb(OTf)₃ and Cu(OTf)₂ is preferably used.

The inventive method may also further comprise, after said step 2), a step of stirring the mixture for 5 minutes to 5 hours.

Before said step 1) or after said step 2), the inventive method may further comprise a step of introducing an organic group into said R₆.

Said organic groups may include, in addition to general organic compounds, at least one selected from the group consisting of functional organic compounds, organometallic compounds, amino acids, proteins, chiral compounds and natural compounds.

### [Advantageous Effects]

The present invention provides a method of introducing an organic group into an inorganic material such as silica or ITO glass using an organosilane compound having allyl or a methallyl derivative, in which an acid is used as a catalyst to increase reaction activity such that the organic group can be effectively introduced even at room temperature. Thus, the present invention is highly effective in introducing thermally sensitive organic groups such as a natural compound or a protein, and can also be applied to modify the surfaces of not only amorphous silica and porous silica, but also ITO glass for use in the electronic industry or sensor applications, and thus can be widely applied in solid surface modification reactions and the like. In addition, the allyl or methallyl derivative has an advantage in that it is easily separated and purified using a silica gel column, because it is a compound which is stable at room temperature.

### [Description of Drawings]

FIG. 1 is a ¹³C NMR photograph taken after allowing amorphous silica to react with 3-chloropropyl-trimethallyl-silane in the presence of an acetonitrile solvent using Sc(OTf)₃ as a catalyst.
FIG. 2 is a ¹³C NMR photograph taken after allowing amorphous silica to react with 3-chloropropyl-dimethylmethallyl-silane in the presence of an acetonitrile solvent using Sc(OTf)₃ as a catalyst.
FIG. 3 is a ¹³C NMR photograph taken after allowing amorphous silica to react with 3-chloropropyl-methyldimethallyl-silane in the presence of an acetonitrile solvent using Sc(OTf)₃ as a catalyst.
FIG. 4 is a ¹³C NMR photograph taken after allowing amorphous silica to react with 3-chloropropyl-trimethallyl-silane in the presence of an acetonitrile solvent using Sc(OTf)₃ as a catalyst.
FIG. 5 is a photograph of unreacted amorphous silica.
FIG. 6 is a photograph taken after allowing amorphous silica to react with a dabsyl-trimethallyl-silane derivative in the presence of an acetonitrile solvent using Sc(OTf)₃ as a catalyst.
FIG. 7 is a photograph showing fluorescence test results for unreacted amorphous silica.
FIG. 8 is a photograph showing fluorescence test results for amorphous silica which was allowed to react with a fluoroscein isothiocyanate (FITC)-trimethallyl-silane derivative in the presence of an acetonitrile solvent using Sc(OTf)₃ as a catalyst.
FIG. 9 is a graphic diagram showing the results of MALDI-TOF MASS spectrometry for bovine serum albumin.
FIG. 10 is a graphic diagram showing the results of MALDI-TOF MASS spectrometry for a compound comprising a trimethallyl-silane derivative bound to bovine serum albumin.
FIG. 11 is a photograph showing contact angle test results for ITO glass treated with a piranha solution.
FIG. 12 is a photograph showing the results of a contact angle test conducted after allowing ITO glass to react with dodecyldimethylmethallylsilane in the presence of an ethanol solvent using HCl as a catalyst.
FIG. 13 is a photograph showing the result of a contact angle test conducted after allowing ITO glass to react with dodecyldimethylmethallylsilane in the presence of an acetonitrile solvent using Sc(OTf)₃ as a catalyst.
FIG. 14 is a photograph showing the result of a contact angle test conducted after allowing ITO glass to react with dodecylmethyldimethallylsilane in the presence of an ethanol solvent using HCl as a catalyst.
FIG. 15 is a photograph showing the result of a contact angle test conducted after allowing ITO glass to react with dodecyldimethylmethallylsilane in the presence of an acetonitrile solvent using Sc(OTf)₃ as a catalyst.
FIG. 16 is a photograph showing the results of a contact angle test conducted after allowing ITO glass to react with dodecyltrimethallylsilane in the presence of an ethanol solvent using HCl as a catalyst.
FIG. 17 is a photograph showing the result of a contact angle test conducted after allowing ITO glass to react with dodecyltrimethallylsilane in the presence of an acetonitrile solvent using Sc(OTf)₃ as a catalyst.
FIG. 18 is a graphic diagram showing the results of cyclic voltametry conducted after allowing ITO glass to react with ferrocene-trimethallyl-silane in the presence of an ethanol solvent using HCl as a catalyst.

### [Best Mode]

Hereinafter, the present invention will be described in further detail.

The present invention relates to a surface-modified inorganic material, which is obtained by allowing an inorganic material such as silica or ITO glass to react with an organosilane compound, having allyl or an allyl derivative and represented by Formula 1, in the presence of an acid and an organic solvent, to thereby modify the surface of the inorganic material: 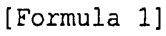 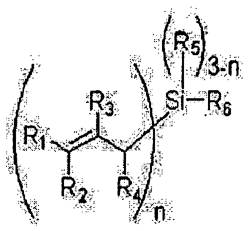 wherein R₁ to R₅ are each individually H or a linear or branched C₁-C₃₀ alkyl group, R6 is a linear or branched C₁-C₁₈ alkyl group, a linear or branched C₁-C₃₀ aliphatic unsaturated hydrocarbon, a C₁-C₃₀ ring compound, a C₁-C₃₀ aromatic ring compound, or a linear or branched C₁-C₁₈ alkyl group or linear or branched C₁-C₁₈ aliphatic unsaturated hydrocarbon containing at least one functional group selected from the group consisting of halogen, azide, amine, ketone, ether, amide, ester, triazole and isocyanate, and n is an integer ranging from 1 to 3.

The present invention can be applied to all general inorganic materials, and preferably solid silica or ITO glass. Examples of the solid silica preferably include, but are not limited to, amorphous silica, porous silica and zeolite, which provide high efficiency. As the ITO glass, conventional glass can be used in the present invention.

Examples of the organosilane compound having allyl or an allyl derivative, used in the present invention, may include all compounds in which a silicon atom is substituted with 1-3 allyls or allyl derivatives as shown in Formula 1. Preferred is a methallyl silane compound which has the best efficiency.

Meanwhile, as the functional group (R₆) of the organosilane compound having allyl or an allyl derivative, any functional group can be used as long as it can introduce various organic groups through a series of chemical reactions (e.g., S_{N}1 and S_{N}1 reactions, click chemistry, Staudinger ligation, etc.). Preferred examples of the functional group, which can be used in the present invention, include a linear or branched C₁-C₁₈ alkyl group, a linear or branched C₁-C₃₀ aliphatic unsaturated hydrocarbon, a C₁-C₃₀ ring compound, a C₁-C₃₀ aromatic ring compound, and a linear or branched C₁-C₁₈ alkyl group or linear or branched C₁-C₁₈ aliphatic unsaturated hydrocarbon containing at least one functional group selected from the group consisting of halogen, azide, amine, ketone, ether, amide, ester, triazole and isocyanate, the alkyl group being preferably a propyl group, the propyl group preferably comprising a functional group in view of reactivity and production cost. Meanwhile, the aliphatic unsaturated hydrocarbons include alkene and alkyne.

Thus, the present invention aims to introduce various organic groups into an inorganic material such as silica or ITO glass by substituting the above-described functional groups with the organic molecular groups. In other words, the present invention aims to prepare a surface-modified inorganic material, i.e., an organic/inorganic hybrid material, by introducing a variety of desired organic groups into the inorganic material.

Particularly, because the method of the present invention can be conducted at room temperature, it is useful for introducing functional organic compounds for special applications such as sugars or dyes, organometallic compounds, thermally unstable natural compounds or proteins, polymer compounds such as amino acids, or difficult-to-separate and difficult-to-purify chiral compounds. Furthermore, said R₆ group can be suitably selected depending on the kind of organic group to be introduced therein, and can introduced with the organic group through organic reactions such as single-step organic reactions or multiple-step organic reactions.

Meanwhile, the organic group to be introduced according to the present invention can be first introduced into an organosilane compound having allyl or an allyl derivative, and then be allowed to react with an inorganic material. Alternatively, the organic group can also be finally introduced into an inorganic material after allowing the inorganic material to react with the organosilane compound having allyl or an allyl derivative.

In other words, according to the present invention, the R₆ group of the organosilane compound having allyl or an allyl derivative is first introduced into the desired organic group, and the organosilane compound is then subjected to a purification process such as column chromatography, and is finally allowed to react with an inorganic material. Alternatively, the organosilane compound having allyl or an allyl derivative is first allowed to react with an inorganic material, and then the desired organic group is introduced into the R₆ group.

Unlike the prior synthesis method, which carries out the reaction by reflux at high temperature in a toluene solvent, the present invention enables various organic groups to bond to the surface of solid silica, even though the reaction is conducted using an acid catalyst at room temperature.

The acid usable as the catalyst in the present invention is not specifically limited, but is preferably Lewis acid, which provides high yield.

Specific examples of the acid catalyst include trivalent cations from Lewis acids such as Sc(OTf)₃, In(OTf)₃, Cu(OTf)₃ and Yb(OTf)₃, and protons (H⁺) from Bronsted acids such as HCl, H₂SO₄, HNO₃ and p- CH₃C₆H₄SO₃H. Among them, Sc(OTf)₃ is more preferably used because it has the best catalytic activity.

Regarding the mechanism of this reaction, it is believed that the reaction efficiently proceeds by that the acidity of the hydroxyl group of the inorganic material, such as solid silica or ITO glass, increases due to Lewis acid, and the methallyl group or the allyl group of the organosilane compound having allyl or an allyl derivative is removed in the form of isobutene or propene.

The reaction temperature in the present invention is not specifically limited, and the reaction can be carried out at high yield even at high temperatures. Preferably, the reaction can be actively carried out at 0-60 °C, and more preferably, it can be carried out even at 10-30 °C without needing a reflux or heating process. Accordingly, because the present invention uses a highly active acid, particularly Lewis acid, as a catalyst, it is very effective in increasing the reaction yield even at room temperature and introducing a thermally sensitive organic group into an inorganic material. Thus, the present invention has advantages of making a reaction process simple and of reducing production cost.

As the organic solvent in the present invention, polar and non-polar solvents can all be used. Preferably, at least one selected from the group consisting of alcohol, toluene, benzene, dimethylformamide (DMF), and acetonitrile is used. More preferably, in view of efficiency, ethanol is used for employing of a protonic acid, and acetonitrile is used for emplolying of Lewis acid.

Unlike alkoxysilane or chlorosilane, which are used in the prior method, methallylsilane or allylsilane used in the present invention can be purified by column chromatography at room temperature, because they do not react with silica at room temperature. Thus, even methallylsilanes, which have a molecular weight so high that fraction distillation is impossible, can be purified through column chromatography. These organic compounds are activated by an acid catalyst even at room temperature, and thus, if these compounds need to be introduced into solid silica or ITO glass, the organic compounds containing various organic groups can be introduced into solid silica or ITO glass.

According to another aspect of the present invention, there is provided a method for modifying the surface of an inorganic material, the method comprising the steps of: 1) purifying an organosilane compound, having allyl or an allyl derivative and represented by Formula 1, and 2) mixing an inorganic material with the purified organosilane compound, an acid and an organic solvent: 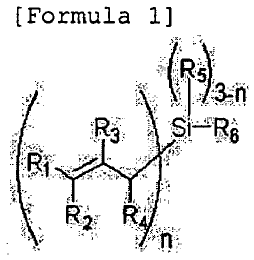 wherein R₁ to R₅ are each individually H or a linear or branched C₁-C₃₀ alkyl group, R₆ is a linear or branched C₁-C₁₈ alkyl group, a linear or branched C₁-C₃₀ aliphatic unsaturated hydrocarbon, a C₁-C₃₀ ring compound, a C₁-C₃₀ aromatic ring compound, or a linear or branched C₁-C₁₈ alkyl group or linear or branched C₁-C₁₈ aliphatic unsaturated hydrocarbon containing at least one functional group selected from the group consisting of halogen, azide, amine, ketone, ether, amide, ester, triazole and isocyanate, and n is an integer ranging from 1 to 3.

The purification step 1) can be performed using a reaction suitable for obtaining the desired organosilane compound having allyl or an allyl derivative, and the silane compound subjected to said reaction can be purified using a conventional purification process, preferably column chromatography.

The mixing step 2) is performed by suitably mixing the inorganic material with the purified organosilane compound, the acid and the organic solvent. In this case, the acid used may be at least one selected from the group consisting of HCl, H₂SO₄, HNO₃, p-CH₃C₆H₄SO₃H, Sc(OTf)₃, In(OTf)₃, Yb(OTf)₃ and Cu(OTf)₂, and although the mixing can also be performed together with a separate heating or reflux reaction, the mixing is preferably conducted at 10-30 °C without needing the heating or reflux reaction.

Preferably, the inventive method may further comprise, after the step 2), a step of stirring the mixture for 5 minutes - 5 hours depending on the kind of organosilane compound and the kind of organic group introduced, to thereby facilitate the reaction.

Preferably, the inventive method may further comprise, before the step 1) or after the step 2), a step of introducing an organic group into said R6.

The organic group may preferably be at least one selected from the group consisting of functional organic compounds, organometallic compounds, amino acids, proteins, chiral compounds and natural compounds.

### [Mode for Invention]

Hereinafter, the present invention will be described in detail with reference to examples. It is to be understood, however, that these examples are for illustrative purposes and are not to be construed to limit the scope of the present invention.

### Example 1

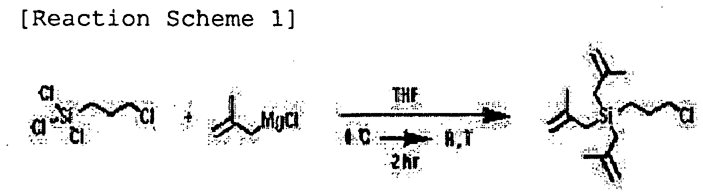

As used herein, the term "R.T." means room temperature.

As shown in Reaction Scheme 1 above, a dry reactor was charged with nitrogen, and then 5.0 g (24 mmol) of 3-chloropropyl-trichloro-silane and 20 ml of THF was fed into the reactor. Then, 1.0M methallyl-magnesium chloride (94 mmol, 100 mL) was added dropwise thereto over 2 hours. After completion of the reaction, the organic layer was extracted with NH₄Cl aqueous solution and ether and washed with saturated NaCl. The resulting material was dried with anhydrous MgSO₄, and then filtered through celite to remove MgSO₄, and the residue was purified through column chromatography (n-Hex : EA = 10:1, Rf=0.67), thus obtaining 6.3 g (97% yield) of pure 3-chloropropyl-trimethallyl-silane.
¹H NMR (250MHz, CDCl₃) (ppm) 4.67-4.48(d, J=27.5Hz, 6H), 3.52-3.47(t, J=6.9Hz, 2H), 1.87-1.80(m, 2H), 1.75(s, 9H), 1.56(s, 6H), 0.78-0.72(m, 2H); ¹³C NMR (62.9MHz, CDCl₃) (ppm) 149.9, 110.0, 54.7, 25.7, 24.2, 23.7, 10.5; IR spectrum (neat) 3072, 2925, 2864, 2721, 2663, 1747, 1635, 1462, 1374, 1150, 877, 719 cm⁻¹; Anal. Calculated for C₁₅H₂₇ClSi: C, 66.50; H, 10.05; found: C, 66.47; H, 10.30.

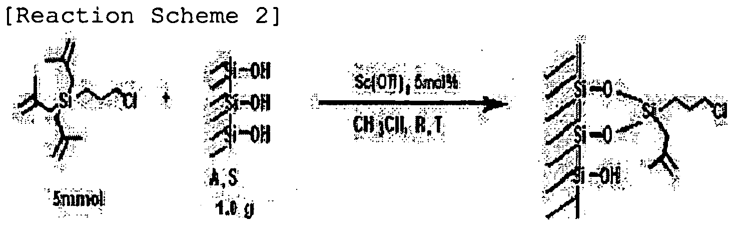

As used herein, the term "A.S." means amorphous silica.

As shown in Reaction Scheme 2 above, in a 5-mL V-vial, 1.3 g (5 mmol) of 3-chloropropyl-trimethallyl-silane, 1 g of amorphous silica and 123 mg (0.25mmol) of Sc(OTf)₃ were dissolved using 3 mL of acetonitrile as a solvent.

Then, the vial was plugged and the contents in the vial were allowed to react for 10 minutes with stirring. After completion of the reaction, the silica solid was placed in a cellulose thimble and subjected to solid-liquid extraction in an ethanol solvent for 24 hours using a Soxhlet extractor so as to remove unreacted material, and the remaining solid was dried in a vacuum.

Said sample obtained by reaction for 10 minutes was dried and subjected to elemental analysis, and the analysis results showed that the weight percentage of carbon was 9.0115 wt%, and the weight percentage of hydrogen was 1.7915 wt%. Based on the weight percentage of carbon, the rate of organic substance loading onto the silica was calculated as follows. First, 0.090115 g was divided by the molecular weight of carbon (12 g/mol) and then divided by 7, which is the number of carbons fixed to the amorphous silica.

As a result, it was found that 1.07 mmol of the starting material per g of the solid silica became bonded to the surface of the solid silica surface through the reaction, and the loading rate of the sample obtained by reaction for 30 minutes increased slightly to 1.19, but the loading rate did not increase further even if the reaction was conducted for more than 2 hours.

These results are shown in Table 1 below.

### Example 2

The procedure of Example 1 was repeated, except that the reaction according to Reaction Scheme 2 was conducted at room temperature for 30 minutes. The results are shown in Table 1 below.

### Example 3

The procedure of Example 1 was repeated, except that the reaction according to Reaction Scheme 2 was conducted at room temperature for 1 hour.

The results are shown in Table 1 below.

### Comparative Example 1 to 4

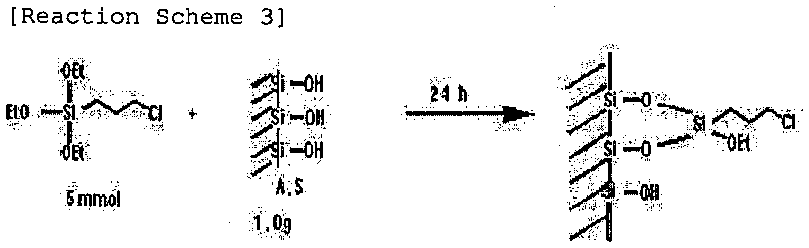

The procedure of Example 1 was repeated, except that, as shown in Reaction Scheme 3 above, 1.2 g (5mmol) of 3-chloropropyl-triethoxy-silane was used in place of 3-chloropropyl-trimethallyl-silane. The results are shown in Table 1 below. Meanwhile, catalysts and temperatures used herein are shown in Table 1 below.

### Examples 4 to 7

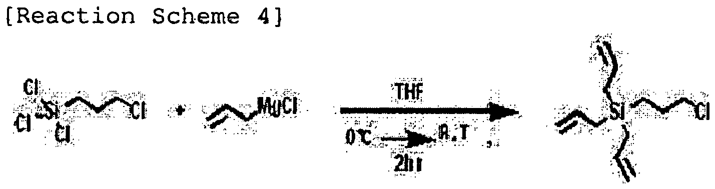

As shown in Reaction Scheme 4 above, a dry reactor was charged with nitrogen, into which 5.0g (24 mmol) of 3-chloropropyl-trichloro-silane and 20 mL of THF were then added. Then, 1.0M allyl-magnesium chloride (94mmol, 100mL) was added dropwise thereto over 2 hours. After completion of the reaction, the organic layer was extracted with NH₄Cl aqueous solution and ether and washed with NaCl. The washed material was dried with anhydrous MgSO₄ and then filtered through celite to remove MgSO₄. The residue was purified through column chromatography (n-Hex : EA = 10:1, Rf=0.69), thus obtaining 5.4 g (98% yield) of pure 3-chloropropyl-triallyl-silane.
¹H NMR (250MHz, CDCl₃) (ppm) 4.66-4.56(d, J=25.4Hz, 6H), 3.52-3.47(t, J=13.8Hz, 2H), 1.87-1.78(m, 2H), 1.75(s, 9H), 1.66(s, 6H), 0.79-0.71(m, 2H); ¹³C NMR (62.9MHz, CDCl₃) (ppm) 143.0, 110.1, 48.1, 27.7, 25.9, 24.3, 11.2; IR spectrum (neat) 3083, 2976, 2914, 2884, 1629, 1429, 1265, 1163, 1040, 989, 897, 809 cm⁻¹; Anal. Calculated for C₁₂H₂₁ClSi: C, 62.98; H, 9.25; found: C, 62.87; H, 9.46.

Thereafter, the procedure of Example 1 was repeated, except that 3-chloropropyl-triallyl-silane was used in place of 3-chloropropyl-trimethallyl-silane. The results of elemental analysis for the reaction product are shown in Table 1. Meanwhile, the reaction time is shown in Table 1.

### Examples 8 to 10

The reaction was carried out using 3-chloropropyl-trimethallyl-silane in 2 ml ethanol in the presence of 40 mol% HCl (183mg), instead of 5 mol% Sc(OTf)₃, as an acid catalyst. The reaction results are shown in Table 1. In addition, the reaction time is shown in Table 1 below.

### Examples 11 to 13

Reaction was carried in the same manner as in Examples 8-10, except that 3-chloropropyl-triallyl-silane was used in place of 3-chloropropyl-trimethallyl-silane. The reaction results are shown in Table 1 below. Also, the reaction time is shown in Table 1 below.

### Examples 14 to 17

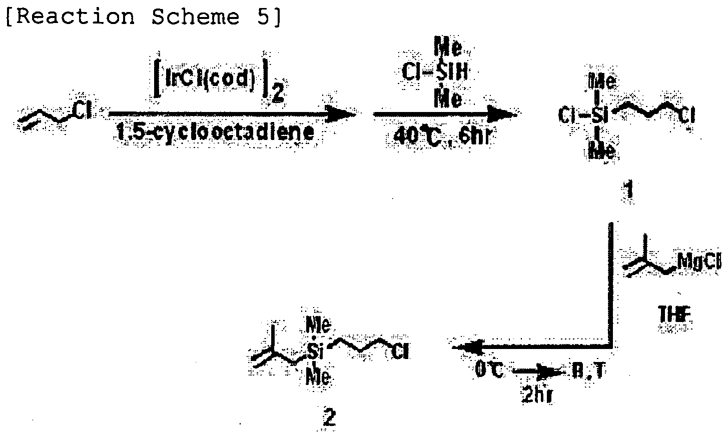

### (1) Synthesis of compound 1 in Reaction Scheme 5

30 mg of an iridium catalyst (chloro-1,5-cyclooctadiene iridium. (I) dimer) was placed in a dry reactor which was then charged with nitrogen.
Then, 9.2 g (120 mmol) of allyl chloride and about 30 µℓ of 1,5-cyclooctadiene were added thereto, and then 11g (120 mmol) of chlorodimethyl-silane was slowly added. Then, the mixture was stirred at 40 °C for 6 hours.
After completion of the reaction, the reaction product was subjected to fractional distillation, thus obtaining 15 g(72% yield) of pure 3-chloropropyl-chlorodimethyl-silane (1).

### (2) Synthesis of compound 2 in Reaction Scheme 5

8 g (83.7mmol) of the above-synthesized 3-chloropropyl-chlorodimethyl-silane (1) (8g, 83.7 mmol) was dissolved in 10 mL of THF, to which 1.0 M methallyl magnesium chloride (167 mmol, 180 mL) was then slowly added at 0°C, and the mixture was stirred for 2 hours. After completion of the reaction, the organic layer was extracted with NH₄Cl aqueous solution and ether and washed with saturated NaCl. The washed material was dried with anhydrous MgSO₄ and then filtered through celite to remove MgSO₄. The residue was purified through column chromatography (n-Hex : EA = 10:1, Rf=0.69), thus obtaining 14.8 g (89% yield) of pure 3-chloropropyl-dimethylmethallyl-silane (2).
2 : ¹H NMR (250MHz, CDCl₃) (ppm) 4.60-4.48(d, J=30.4Hz, 2H), 3.53-3.48(t, J=7.0Hz, 2H), 1.80-1.72(m, 2H), 1.71(s, 3H), 1.56 (s, 2H), 0.67-0.60(m, 2H), 0.03(s, 6H); ¹³C NMR (62.9MHz, CDCl₃) (ppm) 143.6, 108.7, 48.2, 27.8, 27.2, 25.5, 13.3, -2.93; IR spectrum (neat) 3083, 2960, 2919, 1644, 1450, 1250, 1168, 1004, 876, 743 cm⁻¹; Anal. Calculated for C₉H₁₉ClSi: C, 56.66; H, 10.04; found: C, 56.60; H, 10.21.

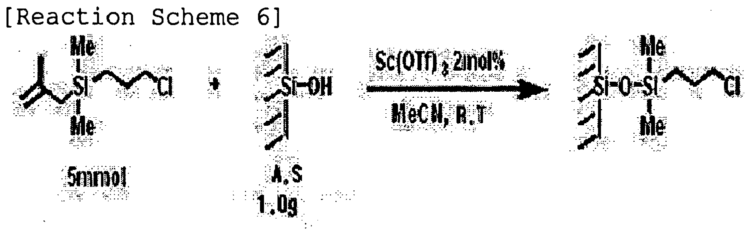

As shown in Reaction Scheme 6 above, in a 5-mL V-vial, 0.9 g (5 mmol) of 3-chloropropyl-dimethylmethallyl-silane, 1 g of amorphous silica and 49.2mg (0.1mmol) of Sc(OTf)₃ were dissolved in 3 mL of acetonitrile. Then, the vial was plugged, and the contents of the vial were stirred for various periods of time as shown in Table 1 below. After completion of the reaction, the silica solid was placed in a cellulose thimble and subjected to solid-liquid extraction in an ethanol solvent for 24 hours using a Soxhlet extractor to remove unreacted material, and the remaining solid was dried in a vacuum. The dried solid was subjected to elemental analysis to determine the rate of organic substance loading onto 1 g of silica. The analysis results are shown as loading rate in Table 1 below. Also, the reaction time is shown in Table 1.

### Examples 18 to 21

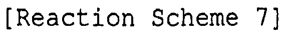

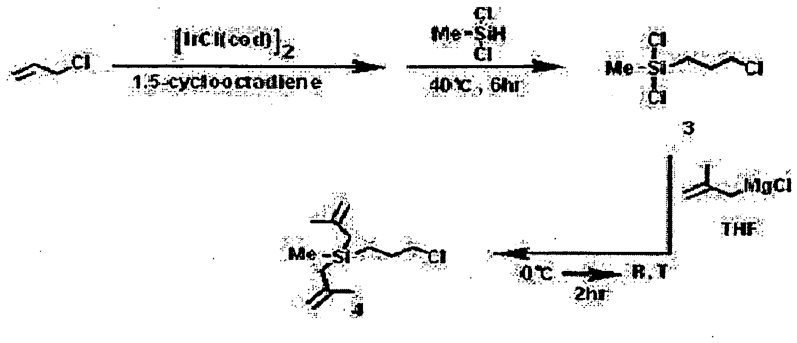

### Synthesis of compound 3 in Reaction Scheme 7

As shown in Reaction Scheme 7 above, 30 mg of an iridium catalyst (chloro-1,5-cyclooctadiene iridium (I) dimer) was placed in a dry reactor which was then charged with nitrogen. 9.2 g (120 mmol) of allyl chloride and about 30 µℓ of 1,5-cyclooctadiene were added thereto, and 14 g (120 mmol) of dichloromethyl-silane was then slowly added, and the mixture was stirred at 40 °C for 6 hours.

After completion of the reaction, the reaction product was fractionally distilled, thus obtaining 17 g (68% yield) of pure 3-chloropropyl-dichloromethyl-silane (3).

### Synthesis of compound 4 in Reaction Scheme 7

9 g (80.8 mmol) of the above-synthesized 3-chloropropyl-dichloromethyl-silane (3) was dissolved in 10 ml of THF, and 1.0 M methallyl magnesium chloride (323 mmol, 330 mL) was slowly added thereto at 0 °C, and the mixture was stirred for 2 hours. After completion of the reaction, the organic layer was extracted with NH₄Cl aqueous solution and ether and washed with saturated NaCl. The washed material was dried with anhydrous MgSO₄ and then filtered through celite to remove MgSO₄. The residue was purified using column chromatography (n-Hex : EA = 10:1, Rf=0.70), thus obtaining 17.5 g (91% yield) of pure 3-chloropropyl-methyldimethallyl-silane (4).
4 : ¹H NMR (250MHz, CDCl₃) (ppm) 4.63-4.51(d, J=30.3Hz, 4H), 3.53-3.47(t, J=13.9Hz, 2H), 1.86-1.76(m, 2H), 1.73(s, 6H), 1.60(s, 4H), 0.73-0.68(m, 2H), 0.09(s, 3H); ¹³C NMR (62.9MHz, CDCl₃) (ppm) 143.3, 109.3, 48.1, 27.7, 25.8, 25.6, 11.9, -4.24; IR spectrum (neat) 3083, 2966, 2914, 1644, 1450, 1378, 1280, 1168, 871, 840 cm⁻¹; Anal. Calculated for C₁₁H₂₃ClSi: C, 62.43; H, 10.04; found: C, 62.48; H, 9.93.

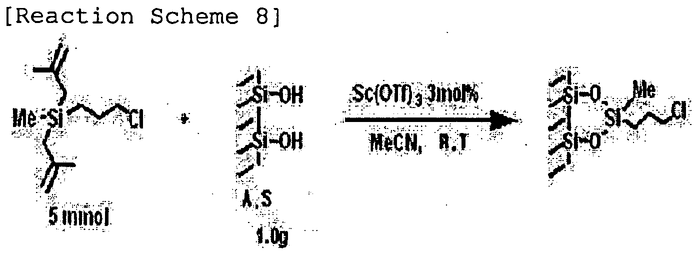

In addition, the procedure of Example 1 was repeated, except that 3-chloropropyl-methyldimethallyl-silane of Reaction Scheme 8 was used in place of 3-chloropropyl-dimethylmethallyl-silane. The reaction results are shown in Table 1 below. Also, the reaction time is shown in Table 1.

**[Table 1]**

| | Reaction time | kind of acid | loading rate(mmol/g) |
|---|---|---|---|
| Example 1 | 10 min | Sc(OTf)₃ | 1.07 |
| Example 2 | 30 min | Sc(OTf)₃ | 1.19 |
| Example 3 | 1 hr | Sc(OTf)₃ | 1.19 |
| Comp. Example 1 | 24 hr | - | 0.0 (R.T.; solvent: acetonitrile) |
| Comp. Example 2 | 24 hr | HCl | 0.0 (R.T.; solvent: acetonitrile) |
| Comp. Example 3 | 24 hr | - | 0.21(reflux; solvent: acetonitrile) |
| Comp. Example 4 | 24 hr | - | 0.27(reflux; solvent: toluene) |
| Example 4 | 10 min | Sc(OTf)₃ | 0.64 |
| Example 5 | 40 min | Sc(OTf)₃ | 0.98 |
| Example 6 | 1 hr | Sc(OTf)₃ | 1.04 |
| Example 7 | 12 hr | Sc(OTf)₃ | 1.02 |
| Example 8 | 10 min | HCl | 0.66 |
| Example 9 | 30 min | HCl | 0.80 |
| Example 10 | 1 hr | HCl | 1.08 |
| Example 11 | 10 min | HCl | 0.56 |
| Example 12 | 1 hr | HCl | 0.54 |
| Example 13 | 12 hr | HCl | 0.55 |
| Example 14 | 10 min | Sc(OTf)₃ | 0.68 |
| Example 15 | 1 hr | Sc(OTf)₃ | 0.76 |
| Example 16 | 2 hr | Sc(OTf)₃ | 0.84 |
| Example 17 | 24 hr | Sc(OTf)₃ | 0.83 |
| Example 18 | 10 min | Sc(OTf)₃ | 0.85 |
| Example 19 | 30 min | Sc(OTf)₃ | 1.31 |
| Example 20 | 1 hr | Sc(OTf)₃ | 1.92 |
| Example 21 | 12 hr | Sc(OTf)₃ | 1.89 |

As can be seen in Table 1, as in Examples 1-3, when 3-chloropropyl-trimethallyl-silane was dissolved in acetonitrile and allowed to react in the presence of a Sc(OTf)₃ catalyst at room temperature, the 3-chloropropyl group was bonded to amorphous silica while releasing isobutene gas. After about 1 hour, the reaction was completed, and it could be found through elemental analysis that 1.19 mmol of the starting material per g of solid silica was bonded to the silica surface through the reaction.

However, as in Comparative Examples 1-4, when the reaction was carried out using 3-chloropropyl-triethoxy-silane, which has been frequently used in the prior art, the reaction did not take place at room temperature, and it proceeded very slowly under reflux conditions, about 1/4 as quickly as in Examples 1-3. In the case of alkoxysilane such as 3-chloropropyl-triethoxy-silane, the reaction scarcely occurred at room temperature. Also, even in severe reaction conditions, such as during reflux, the alkoxysilane realized surface modification only to a very low degree, compared to 3-chloropropyl-trimethallyl-silane seen in Example 1.

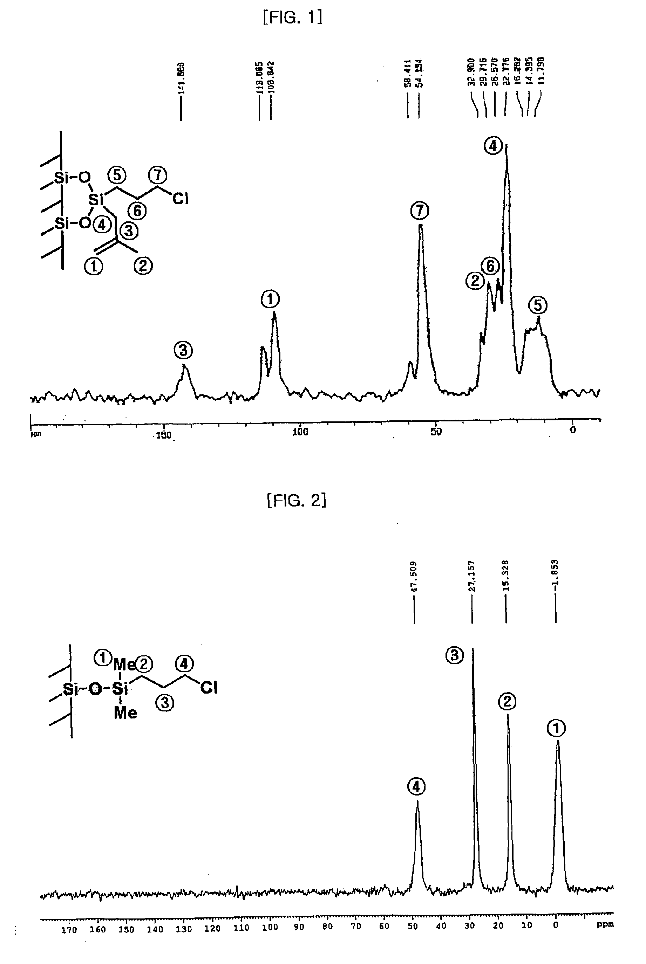

Meanwhile, FIG. 1 shows the results of solid NMR (¹³C) for Examples 1-3.

As can be seen in FIG. 1, two methallyl groups were removed in the form of isobutene, and one methallyl group remained bonded to amorphous silica.

In the reaction (Sc(OTf)₃ 5mmol%) using 3-chloropropyl-triallyl-silane as in Examples 4-7, the reactivity of 3-chloropropyl-triallyl-silane was lower than that of 3-chloropropyl-trimethallyl-silane. Specifically, when 3-chloropropyl-triallyl-silane was allowed to react for 10 minutes in the same conditions as in Example 1, the loading rate thereof was then 0.68 mmol per g of silica, whereas 3-chloropropyl-trimethallyl-silane was bonded to the solid silica surface at a loading rate of 1.07 mmol/g. Thus, it can be seen that trimethallyl-silane was superior to triallyl silane with respect to the efficiency of the Sc(OTf)₃ catalyst for the same reaction time.

In the case of Examples 8-13, in which each of 3-chloropropyl-trimethallyl-silane and 3-chloropropyl-triallyl-silane was allowed to react in the presence of a concentrated hydrochloric acid catalyst (40 mol%), 3-chloropropyl-trimethallyl-silane showed a loading rate of 1.08 mmol/g, but 3-chloropropyl-triallyl-silane showed a loading rate of 0.54 mmol/g for 1 hour.

This suggests that trimethallyl-silane was bonded to the silica surface with a reactivity about two times as high as that of triallyl-silane. As described above, in the case of the acid catalysts in the reaction, Sc(OTf)₃ showed good catalytic activity even in a low amount (5 mol%) compared to hydrochloric acid, and in the case of the starting materials, the methallylsilane compound showed rapid and effective reactivity at room temperature, compared to the allylsilane compound.

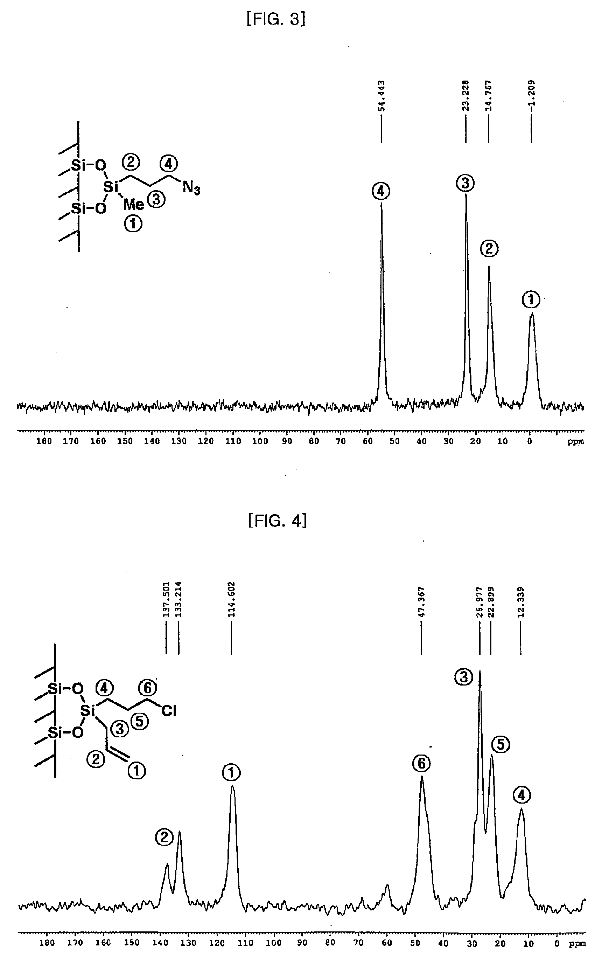

In the case of Examples 14 to 21, in the reaction in which 3-chloropropyl-dimethylmethallyl-silane, having one methallyl group attached thereto, in place of 3-chloropropyl-trimethallyl-silane, was used in the acetonitrile solvent in the presence of 2 mol% of the Sc(OTf)₃ catalyst, a loading rate of 0.76 mmol for one hour could be observed. Also, it can be seen that, when 3-chloropropyl-methyldimethallyl-silane, having two methallyl groups attached thereto, was allowed to react for 1 hour, it was then bonded to the silica surface at a loading rate of 1.92 mmol/g. FIG. 3 shows the results of solid NMR (¹³C) analysis conducted in the same manner as in FIG. 1.

As can be seen in FIG. 3, methallyl groups were all removed and only an alkyl group was bonded to amorphous silica.

### Examples 22 to 30

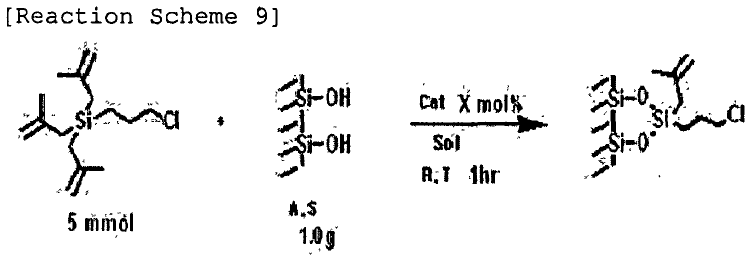

As used herein, the term "Cat" means a catalyst, and "Sol" means a solvent.

As shown in Reaction Scheme 9 above, 3-chloropropyl-trimethallyl-silane was allowed to react for 1 hour in the presence of various amounts of a catalyst. The reaction results are shown in Table 2 below. As can be seen in Table 2, the higher the amount of the catalyst, the higher the loading rate of the compound. Also, the Sc(OTf)₃ catalyst could promote the reaction even when present in a small number of moles, compared to the HCl catalyst.

**[Table 2]**

| | Kind and amount of acid added | solvent | loading rate(mmol/g) |
|---|---|---|---|
| Example 22 | Sc(OTf)₃, 5 mmol% | 3 mℓ acetonitrile | 1.19 |
| Example 23 | Sc(OTf)_{3,} 3 mol% | 3 mℓ acetonitrile | 0.84 |
| Example 24 | Sc(OTf)_{3,} 2 mmol% | 3 mℓ acetonitrile | 0.82 |
| Example 25 | Sc(OTf)_{3,} 1mol% | 3 mℓ acetonitrile | 0.70 |
| Example 26 | Sc(OTf)_{3,} 0.5 mol% | 3 mℓ acetonitrile | 0.62 |
| Example 27 | HCl, 40mol% | 3 mℓ ethanol | 1.08 |
| Example 28 | HCl, 20 mol% | 3 mℓ ethanol | 0.44 |
| Example 29 | HCl, 10 mmol% | 3 mℓ ethanol | 0.38 |
| Example 30 | HCl, 5 mol% | 3 mℓ ethanol | 0.21 |

### Examples 31 to 39

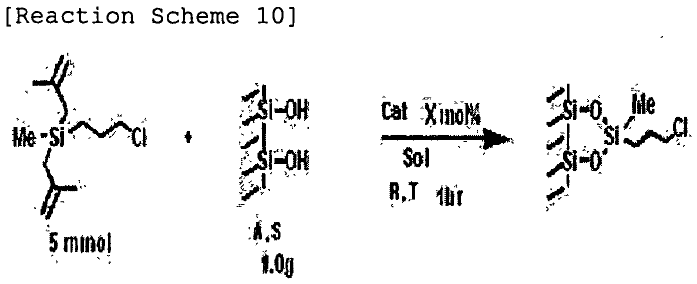

As shown in Reaction Scheme 10, reaction was carried out using 3-chloropropyl-methyldimethallyl-silane in place of 3-chloropropyl-trimethallyl-silane in the presence of various amounts of a catalyst. The loading rate of 3-chloropropyl-methyldimethallyl-silane as a function of the amount of the catalyst is shown in Table 3 below. As can be seen in Table 3, the Sc(OTf)₃ catalyst could promote the reaction even when present in a small number of moles compared to the HCl catalyst.

**[Table 3]**

| | Kind and amount of acid added | solvent | loading rate(mmol/g) |
|---|---|---|---|
| Example 31 | Sc(OTf)₃ 5mol% | 3 mℓ acetonitrile | 1.93 |
| Example 32 | Sc(OTf)_{3,} 3mmol% | 3 mℓ acetonitrile | 1.92 |
| Example 33 | Sc(OTf)_{3,} 2mol% | 3 mℓ acetonitrile | 1.02 |
| Example 34 | Sc(OTf)_{3,} 1mol% | 3mℓ acetonitrile | 0.80 |
| Example 35 | Sc(0Tf)_{3,} 0.5mol% | 3 mℓ acetonitrile | 0.42 |
| Example 36 | HCl, 40mol% | 3 mℓ ethanol | 0.80 |
| Example 37 | HCl, 20mol% | 3 mℓ ethanol | 0.82 |
| Example 38 | HCl, 10mol% | 3 mℓ ethanol | 0.66 |
| Example 39 | HCl, 5mol% | 3 mℓ ethanol | 0.64 |

### Examples 40 to 48

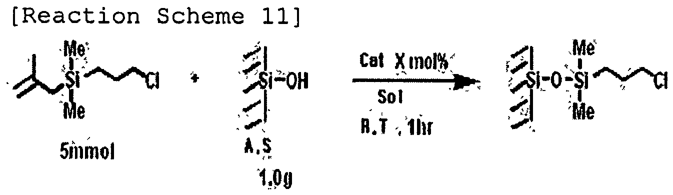

As shown in Reaction Scheme 11 above, reaction was carried out using 3-chloropropyl-dimethylmethallyl-silane. The loading rate of said compound as a function of the kind and amount of acid added is shown in Table 4 below.

**[Table 4]**

| | Kind and amount of acid added | Solvent | loading rate(mmol/g) |
|---|---|---|---|
| Example 40 | Sc(OTf)₃, 5mol% | 3 mℓ acetonitrile | 0.71 |
| Example 41 | Sc(OTf)_{3,} 3mmol% | 3 mℓ acetonitrile | 0.70 |
| Example 42 | Sc(OTf)_{3,} 2mol% | 3 mℓ acetonitrile | 0.76 |
| Example 43 | Sc(OTf)_{3,} 1mol% | 3 mℓ acetonitrile | 0.58 |
| Example 44 | Sc(OTf)_{3,} 0.5mol% | 3 mℓ acetonitrile | 0.44 |
| Example 45 | HCl, 40mol% | 3 mℓ ethanol | 0.63 |
| Example 46 | HCl, 20mol% | 3 mℓ ethanol | 0.59 |
| Example 47 | HCl, 10mol% | 3 mℓ ethanol | 0.53 |
| Example 48 | HCl, 50mol% | 3 mℓ ethanol | 0.38 |

As described in Examples 22 to 48 above, when the three kinds of methallyl-saline derivatives were allowed to react for 1 hour in the presence of various amounts of each of the catalysts and subjected to elemental analysis, it could be found that the Sc(OTf)₃ catalyst showed a higher activity even in a smaller amount than the HCl catalyst, and 3-chloropropyl-methyldimethallyl-silane, having two methallyl groups attached thereto, showed the highest loading rate.

### Examples 49-54

For comparison between the Sc(OTf)₃ catalyst and an In(OTf)₃ catalyst, reaction was carried out in an acetonitrile solvent in the presence of In(OTf)₃ as a catalyst for 1 hour, and the reaction product was subjected to elemental analysis. As a result, when 3 mol% Sc(OTf)₃ was used as the catalyst, the weight percentages of carbon and hydrogen were 9.2179% for carbon and 1.7805% for hydrogen. Based on the weight percentage of carbon, the rate of organic substance loading onto silica was calculated as follows.

The carbon content of 0.92179 g was first divided by the molecular weight of carbon (12 g/mol), and then divided by 4, which is the number of carbons fixed to silica, and as a result, it can be seen that 1.92 mmol of the starting material per g of the solid silica was bonded to the solid silica surface in the reaction. Also, for the case of using 3mol% In(OTf)₃, calculation was performed in the same manner as above and, as a result, a loading rate of 1.07 mmol/g was obtained. Results obtained by allowing the three kinds of methallyl-silane derivatives to react are shown in Table 5 below. As shown in Table 5, Sc(OTf)₃ generally showed good catalytic activity compared to In(OTf)₃.

**[Table 5]**

| | Reaction material | Kind and amount of acid added | loading rate(mmol/g) |
|---|---|---|---|
| Example 49 | 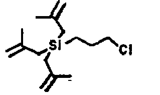 | Sc(OTf)_{3,} 5mol% | 1.19 |
| Example 50 | | In(OTf)₃, 5mol% | 0.83 |
| Example 51 | 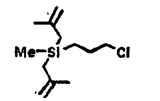 | Sc(OTf)_{3,} 3mol% | 1.92 |
| Example 52 | | In(OTf)_{3,} 3mol% | 1.07 |
| Example 53 | 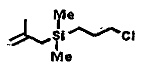 | Sc(OTf)_{3,} 2mol% | 0.76 |
| Example 54 | | In(OTf)_{3.} 2mol% | 0.56 |

### Examples 55-64

In order to introduce various organic groups into solid silica, trimethallyl-silane derivatives having various functional groups were synthesized in the following manner.

### Example 55: Synthesis of 3-acetoxypropyl-trimethallyl-silane

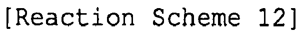

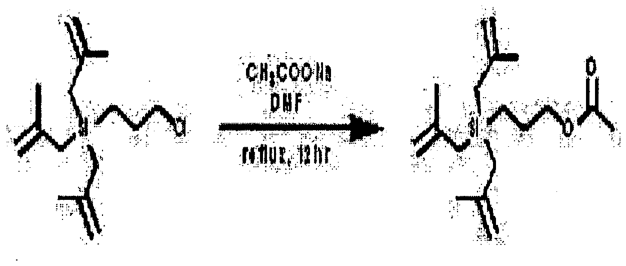

As shown in Reaction Scheme 12 above, to 3-chloropropyl-trimethallylsilane (500 mg, 1.85 mmol) and sodium acetate (303 mg, 3.69 mmol), 10 mL dimethylformamide (DMF) was added and the mixture was refluxed for 12 hours.

After completion of the reaction, the organic layer was separated using distilled water and ether and then purified by column chromatography (n-Hex : EA = 10:1, Rf = 0.44), thus obtaining 376 mg (69% yield) of pure 3-acetoxypropyl-trimethallyl-silane.
¹H NMR (250MHz, CDCl₃) (ppm) 4.66-4.56(d, J=25.6Hz, 6H), 4.03-3.98(t, J=6.86Hz, 2H), 2.04(s, 3H), 1.78(s, 9H), 1.71-1.68(m, 2H), 1.66(s, 6H), 0.69-0.62 (m, 2H); ¹³C NMR (62.9MHz, CDCl₃) (ppm) 171.3, 143.0, 110.0, 67.2, 25.8, 24.2, 23.3, 9.2; IR spectrum (neat) 3083, 2914, 1747, 1644, 1373, 1240, 1050, 871, 810 cm-1; Anal. Calculated for C₁₇H₃₀O₂Si: C, 69.33; H, 10.27; found: C, 69.36; H, 10.34.

### Example 56: Synthesis of 3-azidopropyl-trimethallyl-silane

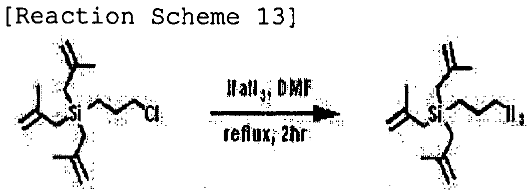

To 3-chloropropyl-trimethallylsilane (1000 mg, 3.69 mmol) and sodium azide (480 mg, 7.38 mmol), dimethylformamide (DMF) was added and the mixture was refluxed for 2 hours in a nitrogen atmosphere. After completion of the reaction, dimethylformamide (DMF) was removed using distilled water and ether, and the organic layer was extracted. The organic layer was dried with anhydrous MgSO₄, and then filtered through celite. After removing the solvent, the residue was purified through column chromatography (n-Hex : EA = 10:1, Rf = 0.6), thus obtaining 839 mg (82% yield) of pure 3-azidopropyl-trimethallyl-silane.
¹H NMR (250MHz, CDCl₃) (ppm) 4.67-4.56(d, J=27.0Hz, 6H), 3.26-3.20(t, J=7.0Hz, 2H), 1.78(s, 9H), 1.77-1.60(m, 2H), 1.66(s, 6H), 0.72-0.66(m, 2H); ¹³C NMR (62.9MHz, CDCl₃) (ppm) 149.9, 110.0, 54.7, 25.7, 24.2, 23.7, 10.5; IR spectrum (neat) 3395, 3076, 2968, 2921, 2098,1639, 1447, 1281, 1166, 1050, 865 cm-1; Anal. Calculated for C₁₅H₂₇N₃Si: C, 64.93; H, 9.81; N, 15.14 found: C, 64.94; H, 9.82; N, 14.96.

### Example 57: Synthesis of 1-(3-trimethallylsilanyl)-propyl-1-hydro-[1,2,3]triazolyl-methanol

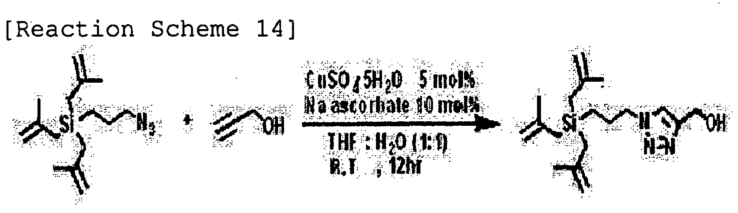

To 3-azidopropyl-trimethallylsilane (500 mg, 1.80 mmol) and propargyl alcohol (111 mg, 1.98 mmol), 1 ml of a mixed solution of THF and water (THF:H₂O=1:1) was added, CuS0₄·5H₂O (22.5 mg, 0.09 mmol) and Na ascorbate (35.7mg, 0.18mmol) were added thereto, and the mixture was stirred at room temperature for 12 hours. After completion of the reaction, the organic layer was extracted with ether and washed with saturated NaCl. The washed material was dried with anhydrous MgSO₄ and filtered through celite to remove MgSO₄, and the residue was purified by column chromatography (n-Hex : EA = 2:5, Rf = 0.30), thus obtaining 5.46 mg (91% yield) of pure 1- (3-trimethallylsilanyl)-propyl-1-hydro-[1,2,3]triazolyl-methanol.
¹H NMR (250MHz, CDCl₃) (ppm) 7.50(s, 1H) 4.81-4.79(d, J=5.26Hz, 2H) 4.65-4.53(d, J=30.3Hz, 6H), 4.34-4.28(t, J=7.20Hz, 2H), 2.00-1.95(m, 2H), 1.72(s, 9H), 1.64(s, 6H), 0.69-0.62(m, 2H); ¹³C NMR (62.9MHz, CDCl₃) (ppm) 142.8, 110.2, 56.3, 53.5, 25.8, 25.3, 24.2, 10.3; IR spectrum (neat) 3365, 3068, 2914, 1644, 1445, 1286, 1173, 1050, 876, 810 cm-1; Anal. Calculated for C₁₅H₂₇N₃Si: C, 64.93; H, 9.81; N, 15.14 found: C, 64.94; H, 9.82; N, 14.96; HR-MS: m/z calculated for C₁₅H₂₇N₃Si [M+Na]⁺=356.2134 found: 356.2150.

### Example 58: Synthesis of 3-aminopropyl-trimethallyl-silane

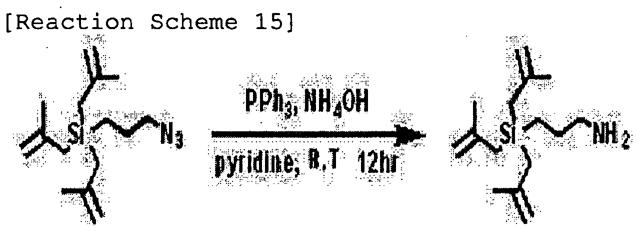

To 3-azidopropyl-trimethallylsilane (500 mg, 1.80 mmol), triphenylphosphin (708 mg, 2.7 mmol) and 5.3 ml NH₄OH, 26 ml of pyridine was added and the mixture was stirred at room temperature for 12 hours. After completion of the reaction, the organic layer was extracted with an excess amount of methylene chloride and a small amount of distilled water, and then dried with anhydrous MgSO₄ and filtered through celite to remove MgSO₄. The residue was purified through column chromatography (MeOH : CHCl₃=1:9, Rf=0.2), thus obtaining 403 mg (89% yield) of pure 3-aminopropyl-trimethallyl-silane.
¹H NMR (250MHz, CDCl₃) (ppm) 4.67-4.57(d, J=26.5Hz, 6H), 2.92-2.86(t, J=7.32Hz, 2H), 2.00-1.95(m, 2H), 1.74(s, 9H), 1.66(s, 6H), 0.73-0.66(m, 2H); ¹³C NMR (100.6MHz, CDCl₃) (ppm) 141.7, 108.9, 52.5, 28.4, 24.7, 23.0, 9.3; IR spectrum (neat) 3078, 2966, 2919, 1644, 1454, 1378, 1281, 1178, 871, 846, 804 cm⁻¹; Anal. Calculated for C₁₅H₂₉NSi: C, 71.64; H, 11.62; N, 5.57 found: C, 65.23; H, 11.36; N, 5.38; HR-MS: m/z calculated for C₁₅H₂₉NSi [M+H]⁺=252.2148 found: 252.2150.

### Example 59: Synthesis of 3-formamidepropyl-trimethallyl-silane

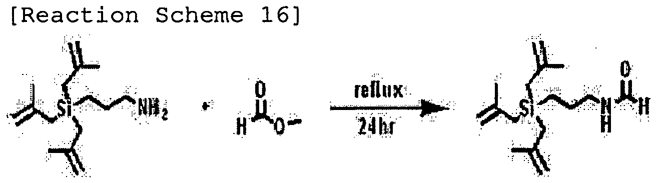

To 3-aminopropyl-trimethallylsilane (500 mg, 1.988 mmol), 10 ml of methyl formate was added, and the solution was refluxed for 24 hours. After completion of the reaction, the remaining methyl formate was removed by vacuum distillation, and the residue was purified by column chromatography (MeOH : CHCl₃ = 1:9, Rf = 0.62), thus obtaining 433 mg (78% yield) of pure 3-formamidepropyl-trimethallyl-silane.
¹H NMR (250MHz, CDCl₃) (ppm) 8.16 (s, 1H) 4.66-4.54 (d, J=30.3Hz, 6H), 3.55-3.47(m, 2H), 1.77(m, 2H), 1.74(s, 9H), 1.65(s, 6H), 0.69-0.62(m, 2H); ¹³C NMR (62.9MHz, CDCl₃) (ppm) 161.3, 142.9, 110.0, 41.5, 25.8, 24.3, 24.1, 10.5; IR spectrum (neat) 3288, 3073, 2970, 2914, 2879, 1665, 1537, 1394, 1281, 1091, 876, 805, 723 cm-1; Anal. Calculated for C₁₆H₂₉NOSi: C, 68.76; H, 10.46; N, 5.01 found: C, 69.47; H, 10.53; N, 4.92.

### Example 60: Synthesis of 3-cyanopropyl-trimethallyl-silane

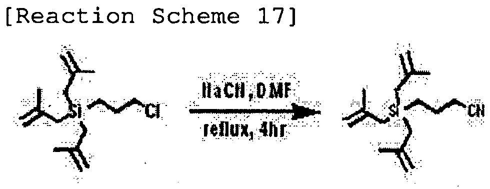

To 3-chloropropyl-trimethallylsilane (1000 mg, 3.69 mmol) and sodium cyanide (181 mg, 7.38 mmol), 8 ml of dimethylformamide was added, and the mixture solution was refluxed for 4 hours. After completion of the reaction, the organic layer was extracted with distilled water and ether, and then purified using column chromatography (n-Hex : EA = 10:1, Rf = 0.37), thus obtaining 917 mg (95% yield) of pure 3-cyanopropyl-trimethallyl-silane.
¹H NMR (250MHz, CDCl₃) (ppm) 4.68-4.56(d, J=29.9Hz, 6H), 2.38-2.32 (t, J=6.95Hz 2H), 1.78 (m, 2H), 1.75 (s, 9H), 1.66 (s, 6H), 0.84-0.77 (m, 2H); ¹³C NMR (62.9MHz, CDCl₃) (ppm) 142.8, 119.8, 110.3, 25.8, 24.3, 21.1, 20.7, 13.3; IR spectrum (neat) 3073, 2971, 2920, 2884, 2244, 1737, 1639, 1455, 1378, 1281, 1173, 1004 cm-1; Anal. Calculated for C₁₆H₂₇NSi: C, 73.49; H, 10.41; N, 5.36 found: C, 73.51; H, 10.52; N, 5.04.

### Example 61: Synthesis of 4-trimethallylsilanyl-butylaldehyde

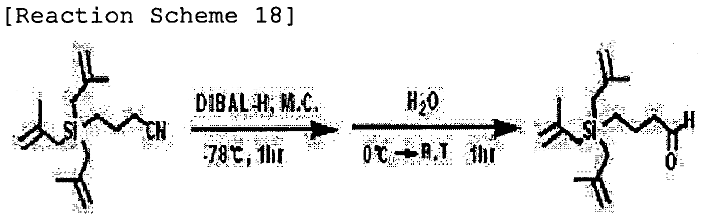

To 3-cyanopropyl-trimethallylsilane (1000 mg, 3.82 mmol), methylene chloride was added, and the solution was cooled to a temperature of -78 °C. Then, 4.5 ml of a solution of 1.0M diisobutylaluminum hydride (DIBAL-H) in methylene chloride was slowly added thereto. After elevating the temperature of the solution to -40 °C, the mixture solution was stirred for one additional hour.

To the stirred solution, silica and distilled water were added, and the mixture solution was stirred at 0 °C for 1 hour and then dried with anhydrous K₂CO₃ and MgSO₄.

The dried material was filtered through celite to remove K₂CO₃ and MgSO₄. After removing the solvent, 839 mg (83% yield) of pure 4-trimethallylsilanyl-butylaldehyde was obtained.
¹H NMR (250MHz, CDCl₃) (ppm) 9.76-9.74 (t, J=1.7Hz, 1H) 4.66-4.55(d, J=26.7Hz, 6H), 2.50-2.44(t, J=7.1Hz 2H), 1.78-1.70 (m, 2H), 1.74 (s, 9H), 1.66 (s, 6H), 0.70-0.63(m, 2H); ¹³C NMR (62.9MHz, CDCl₃) (ppm) 202.7, 142.9, 109.8, 47.6, 25.6, 24.0, 16.7, 13.0; IR spectrum (neat) 3416, 2935, 2730, 2259, 1731, 1639, 1445, 1373, 1081, 917, 733 cm-1; Anal. Calculated for C₁₆H₂₈OSi: C, 72.66; H, 10.67 found: C, 72.70; H, 10.77.

### Example 62: Synthesis of 3-bromopropyl-trimethallyl-silane

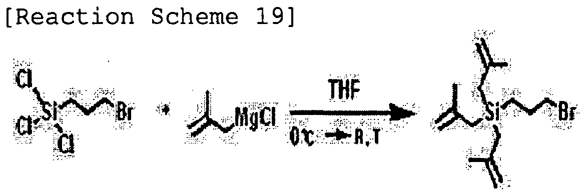

In a reactor, THF was added to 3-bromopropyl-trichlorosilane (500 mg, 1.95 mmol), and the reactor was charged with nitrogen. Then, methallyl magnesium chloride was added slowly thereto, and the mixture solution was stirred for 2 hours. After completion of the reaction, the organic layer was extracted with NH₄Cl and ether, and washed with saturated NaCl. The washed material was dried with anhydrous MgSO₄ and filtered through celite to remove MgSO₄. The residue was purified through column chromatography (n-Hex . EA = 10:1, Rf=0.67), thus obtaining 567 mg (92% yield) of pure 3-bromopropyl-trimethallyl-silane.
¹H NMR (250MHz, CDCl₃) (ppm) 4.66-4.56(d, J=25.6Hz, 6H), 3.41-3.35(t, J=6.9Hz 2H), 1.86-1.80(m, 2H), 1.71(s, 9H), 1.65(s, 6H), 0.80-0.73(m, 2H); ¹³C NMR (62.9MHz, CDCl₃) (ppm) 142.9, 110.1, 54.8, 25.8, 24.3, 23.8, 10.6; IR spectrum (neat) 3083, 2976, 2925, 2889, 2730, 1639, 1455, 1378, 1281, 1173, 1009, 876, 748 cm-1; Anal. Calculated for C₁₅H₂₇BrSi: C, 57.13; H, 8.63 found: C, 57.18; H, 8.73.

### Example 63: Synthesis of 5-hexenyl-trimethallyl-silane

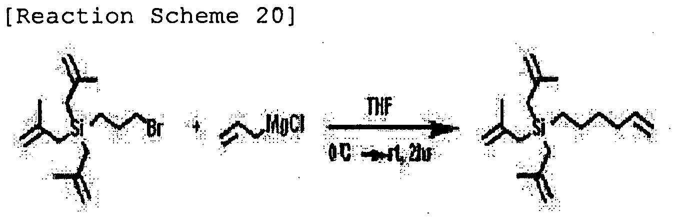

To 3-bromopropyl-trimethallylsilane (500 mg, 1.58 mmol), THF was added. At 0°C, 2.0M allylmagnesium chloride (2 mL, 3.16 mmol) was slowly added thereto, and the mixture solution was then stirred at room temperature for 2 hours.

After completion of the reaction, the organic layer was extracted with NH₄Cl aqueous solution and ether and washed with saturated NaCl. The washed material was dried with anhydrous MgSO₄ and then filtered through celite to remove MgSO₄. The residue was purified through column chromatography (n-Hex : EA = 10:1, Rf=0.80), thus obtaining 725 mg (83% yield) of pure 5-hexenyl-trimethallyl-silane.
¹H NMR (250MHz, CDCl₃) (ppm) 5.81-5.76(m, 1H) 5.03-4.91(m, 2H), 2.06-2.03(m, 2H), 1.74(s, 9H), 1.63(s, 6H), 1.43-1.37(m, 4H), 0.67-0.61(m, 4H); ¹³C NMR (62.9MHz, CDCl₃) (ppm) 143.4, 139.2, 114.5, 109.7, 33.6, 33.2, 25.8, 24.3, 23.4, 13.3; IR spectrum (neat) 3078, 2971, 2930, 2858, 1644, 1455, 1378, 1276, 1168, 917, 876, 810 cm-1; Anal. Calculated for C₁₈H₃₂Si: C, 78.18; H, 11.66; found: C, 78.06; H, 11.81.

### Example 64: Synthesis of galactose-trimethallyl-silane

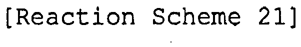

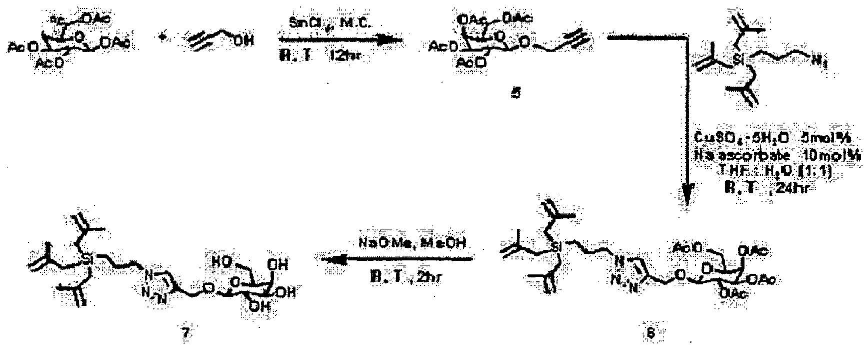

### Synthesis of compound 5 in Reaction Scheme 21

In a reactor, SnCl₄ was dissolved in methylene chloride, to which penta-O-acetyl-β-D-galactopyranoside (2000 mg, 5.12 mmol) was then added. The reactor was charged with nitrogen, and the solution was stirred for 10 minutes, and then propargyl alcohol (430.5 mg, 7.68 mmol) was added thereto.

Then, the mixture solution was further stirred at room temperature for 4 hours. After completion of the reaction, the reaction product was neutralized with 5% NaHCO₃, and the organic layer was separated using distilled water and ethyl acetate. This separation step was repeated three times, and the three organic fractions were combined and washed with saturated NaCl aqueous solution. The washed solution was dried with anhydrous MgSO₄ and filtered through celite to remove MgSO₄ The residue was purified using column chromatography (EA : n-Hex = 1:1, Rf=0.58), thus obtaining 1500 mg (78% yield) of (2-propynyl)-2,3,4,6-O-acetyl-β-D-galactopyranoside [(2-propynyl)-2,3,4,6-O-acetyl-β-D-galactopyranoside] (5).
5: ¹H NMR (250MHz, CDCl₃) (ppm) 5.42-5.40(d, J=3. 0Hz, 1H), 5.26-5.19(m, 1H), 5. 09-5. 04 (dd, J_{ab}=3. 3Hz, J_{bc}=10.4Hz, 1H), 4.76-4.73(d, J=7.8Hz, 1H), 4.39-4.38(d, J=2.4Hz, 2H), 3.98-3.96(d. J=6.6Hz 1H), 2.52-2.50(s, 1H), 2.18-2.01(s, 12H); ¹³C NMR (62.9MHz, CDCl₃) (ppm) 170.3, 100.2, 98.8, 78.3, 75.58, 71.0, 68.6, 67.1, 61.4, 56.1, 21.0, 20.9; IR spectrum (neat) 3276, 2983, 2933, 2883, 2379, 2121, 1747, 1431, 1377, 1227, 1066, 962, 908 cm⁻¹; Anal. Calculated for C₁₆H₂₀O₁₀: C, 51.61; H, 5.41 found: C, 49.80; H, 6.33.

### Synthesis of compound 6 in Reaction Scheme 21

Into a reactor, the above-synthesized compound (5) (1500 mg, 3.88 mmol) and 3-azidopropyl-trimethallyl-silane (2150 mg, 7.76 mmol) were sequentially added, to which 40 ml of a mixed solution of THF and water (THF:H₂O=1:1) was then added. Then, CuSO₄ · H₂O (82.60 mg, 0.33 mmol) and Na ascorbate (128 mg, 0.65 mmol) were added thereto. After the reactor was charged with nitrogen gas, the mixture solution was stirred at room temperature for 12 hours.

After completion of the reaction, the organic layer was extracted several times with hexane, and the organic fractions were combined and washed with saturated NaCl aqueous solution. The washed material was dried with anhydrous MgSO₄ and filtered through celite to remove MgSO₄. The residue was purified through column chromatography (EA : n-hex - 1:1, Rf = 0.78), thus obtaining 1300 mg (51% yield) of pure compound (6).
6 : ¹H NMR (250MHz, CDCl₃) (ppm) 7.49(s, 1H), 5.42-5.40(d, J=3.0Hz, 1H), 5.30(s, 1H), 5.23-5.20(d, J=7.9Hz, 1H), 5.05-5.01(m, 2H), 4.83-4.78(d, J=12.4Hz, 1H), 4.65-4.53(d, J=29.7Hz, 6H)., 4.33-4.28(t, J=7.1Hz, 2H) 4.19-4.16(m, 2H), 2.18(s, 4H), 2.16(s, 4H), 2.10(d, 8H), 1.95(s, 9H), 1.93(s, 6H), 0.69-0.62(m, 2H); ¹³C NMR (62.9MHz, CDCl₃) (ppm) 110.25, 71.0, 53.5, 26.5, 23.4, 21.2; IR spectrum (neat) 3063, 2986, 2889, 2299, 1757, 1644, 1378, 1265, 1055, 886, 743 cm⁻¹; Anal. Calculated for C₃₂H₄₉N₃O₁₀Si: C, 57.90; H, 7.44; N, 6.33 found: C, 57.89; H, 7.64; N, 6.17; HR-MS: m/z calculated for C₃₂H₄₉N₃O₁₀Si [M+Na]⁺=686.3085 found: 686.3088.

### Synthesis of compound 7 in Reaction Scheme 21

To the above-synthesized compound (6) (1000 mg, 1.5 mmol), NaOMe (810 mg, 15 mmol) and methanol was added, and the mixture solution was stirred for 2 hours. After completion of the reaction, DOWEX was added thereto and the mixture was further stirred for about 30 minutes, filtered through celite and then purified through column chromatography (MeOH : CHCl₃ = 1:7, Rf=0.31), thus obtaining 312 mg (42% yield) of pure galactose-trimethallyl-silane (7).
7 : ¹H NMR (400MHz, CDCl₃) (ppm) 7.72 (s, 1H), 4.93-4.90 (d, J=12.4Hz, 2H), 4.74-4.71(d, J=12, 1H), 4.64-4.52(d, J=43.6Hz, 6H), 4.35-4.33(d, J=7.2 2H), 4.29-4.26(t, J=7.2Hz, 2H), 3.96(s, 1H), 3.76(s, 2H), 3.65(s, 1H) 3.55(s, 1H), 3.48(s, 1H), 1.98-1.89 (m, 2H), 1.66(s, 9H), 1.55(s, 6H), 0.69-0.62 (m, 2H);¹³C NMR (100.6MHz, CDCl₃) (ppm) 143.6, 142.9, 123.3, 109.7, 102.3, 74.3, 73.2, 70.7, 68.3, 61.7, 60.7, 53.0, 25.3, 24.7, 23.6, 9.9; IR spectrum (neat) 3406, 3083, 2914, 2310, 1634, 1439, 1260, 1061, 871, 743 cm⁻¹; Anal. Calculated for C₂₄H₄₁N₃O₆Si: C, 58.15; H, 8.34; N, 8.48 found: C, 58.11; H, 8.46; N, 8.40; HR-MS: m/z calculated for C₂₄H₄₁N₃O₆Si [M+Na]⁺=518.2662 found: 518.2664.

### Example 65: Synthesis of 1-benzyl-3-(3-trimethallylsilyl)-propyl-urea

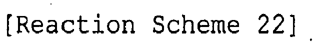

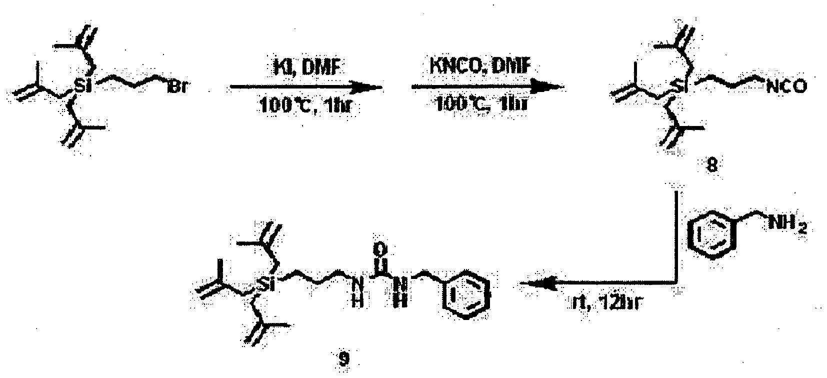

### Synthesis of compound 8 in Reaction Scheme 22

To 3-bromopropyl-trimethallyl-silane (5000 mg, 15.85 mmol) synthesized in the same manner as in Reaction Scheme 19 of Example 62, potassium iodide (1300 mg, 7.93 mmol) was added, to which 20 ml of DMF was then added. The mixture solution was heated from room temperature to 100 °C and stirred at that temperature for 1 hour. Then, potassium isocyanate (2572 mg, 31.7 mmol) was added into the reactor, followed by stirring for 1 hour. After completion of the reaction, the precipitate was removed using hexane, to thereby obtain 3-isocyanate propyl-trimethallyl-silane (8), which was then subjected to a subsequent reaction without undergoing a separate separation process, because it was sensitive to water. 8 : IR spectrum (neat) 3355, 3078, 2925, 2879, 2274, 1690, 1639, 1455, 1281, 1173, 881 cm-¹.

### Synthesis of compound 9 in Reaction Scheme 22

Into a reactor, the above-synthesized compound (8) (2600 mg, 9.37 mmol) and benzylamine (2008 mg, 18.74 mmol) were sequentially added, and 7 ml of DMF was then added. The mixture solution was stirred at room temperature for 12 hours. After completion of the reaction, the organic layer was extracted several times with ether and then washed with saturated NaCl aqueous solution. The washed material was dried with anhydrous MgSO₄ filtered through celite to remove MgSO₄ and then purified using column chromatography (CHCl₃ : MeOH = 10:1, Rf = 0.46), thus obtaining 1704 mg (68% yield) of pure compound (9).
9 : ¹H NMR (250MHz, CDCl₃) (ppm) 7.34-7.24 (m, 5H), 4.63-4.53(d, J=25.5Hz, 6H), 4.33-4.31(d, J=5.7Hz, 2H), 3.13-3.05 (q, J_{ab}=6.9Hz, J_{bc}=6.1Hz, J_{cd}=6.8Hz, 1H), 1.72(s, 9H), 1.62(s, 6H), 1.57-1.47(m, 2H), 0.62-0.55(m, 2H) ; ¹³C NMR (62.9MHz, CDCl₃) (ppm) 158.7, 143.1, 139.6, 128.7, 127.5, 127.3, 109.9, 44.5, 43.8, 25.8, 24.7, 24.1, 10.4; IR spectrum (neat) 3345, 3068, 2966, 2914, 1747, 1634, 1573, 1378, 1286, 876, 702 cm⁻¹; Anal. Calculated for C₂₃H₃₆N₂OSi: C, 71.82; H, 9.43; N, 7.28 found: C, 71.05; H, 9.54; N, 6.40; HR-MS: m/z calculated for C₂₃H₃₆N₂OSi [M+Na]⁺=407.2495 found: 407.2498.

### Examples 66 to 75

In a 5-ml V-vial, 1.2 g (5 mmol) of 3-aminopropyl-trimethallylsilane, 1g of amorphous silica and 125 mg (0.25 mmol) of Sc(OTf)₃ were dissolved in 3ml of acetonitrile. Then, the vial was plugged and the solution was stirred at room temperature for 1 hour. After completion of the reaction, the silica solid was placed in a cellulose thimble and subjected to solid-liquid extraction in an ethanol solvent using a Soxhlet extractor for 24 hours to remove unreacted material, and the remaining solid was dried in a vacuum and then analyzed for elemental composition (carbon, nitrogen and hydrogen). As a result, the weight percentages of carbon, nitrogen and hydrogen were found to be 4.5754 (%) for carbon, 0.6899 (%) for nitrogen and 1.4243 (%) for hydrogen. Using the weight percentage of carbon, the rate of organic substance loading on the silica was calculated. For this purpose, when 0.045754 g was first divided by the molecular weight of carbon (12 g/mol) and then divided by 7, which is the number of carbons fixed to the silica, it was found that 0.54 mmol of the starting material per g of amorphous silica was bonded to the solid silica surface in the reaction. For nitrogen, the same calculation method as above was applied.

Specifically, when 0.006899 g was divided by the molecular weight of nitrogen, it was found that 0.50 mmol of the starting material was bonded to the solid silica surface in the reaction.

This was indicated as loading rate (when calculation for nitrogen was performed in the same manner as above, a loading rate of 0.50 mmol/g was obtained, which was the same result as that calculated using carbon). In another example, 3-acetoxypropyl-trimethallyl-silane was tested in the same manner as above and analyzed for elemental composition. As a result, the weight percentages of carbon and hydrogen were found to be 9.9240% for carbon and 1.7223% for hydrogen. Based on the weight percentage of carbon, the following calculation was performed in the same manner as above. When 0.099240 g was divided by the molecular weight of carbon (12 g/mol) and then divided by 9, which was the number of carbons fixed to the silica surface, it was found that the starting material was bonded to the silica surface at a loading rate of 0.92 mmol/g. Compounds of Examples 55 - 65 as starting materials, which were variously substituted under the same reaction conditions, were allowed to react with silica in the same manner as described above. The reaction results (loading rates) are shown in Table 6 below.

**[Table 6]**

| | Product | loading rate(mmol/g) |
|---|---|---|
| Example 66 | 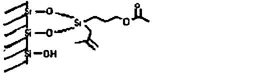 | 0.92 |
| Example 67 | 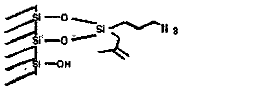 | 0.65 |
| Example 68 | 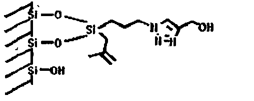 | 0.89 |
| Example 69 | 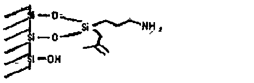 | 0.54 |
| Example 70 | 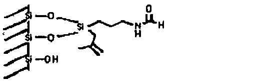 | 0.76 |
| Example 71 | 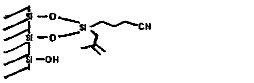 | 1.04 |
| Example 72 | 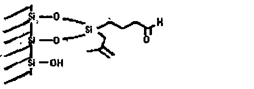 | 0.90 |
| Example 73 | 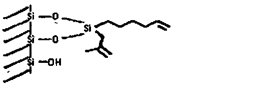 | 0.42 |
| Example 74 | 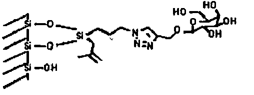 | 0.21 |
| Example 75 | 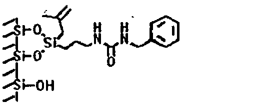 | 0.15 |

### Example 76

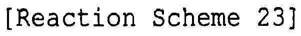

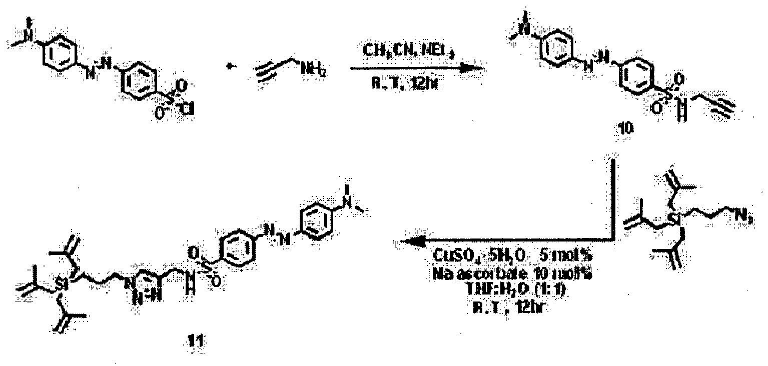

### Synthesis of compound 10 in Reaction Scheme 23

Dabsyl chloride (653 mg, 2 mmol) was dissolved in 9 ml of acetonitrile, to which 0.19 ml of triethylamine and 70 µℓ of propargyl amine were then added. The mixture solution was stirred at room temperature for 12 hours.

The reaction product was neutralized with NaHCO₃, and the organic layer was extracted with methylene chloride and distilled water and then purified through column chromatography (EA: n-Hex = 1:1, Rf = 0.5), thus obtaining 610mg (89% yield) of pure compound (10).
10 : ¹H NMR (250MHz, CDCl₃) (ppm) 8.00-7.89(m, 6H), 6.78-6.45(d, J=9.2Hz, 2H), 3.91-3.87(m, 3H), 3.13(s, 6H), 2.11-2.09(t, J=2.5, 1H).

### Synthesis of compound 11 in Reaction Scheme 23

To the above-synthesized compound (10) (900 mg, 2.31 mmol) and 3-azidopropyl-trimethallyl-silane (533.6 mg, 2.54 mmol), CuSO₄ · H₂O (29 mg, 0.116 mmol) and sodium (Na) ascorbate (45.8 mg, 0.231 mmol) were added, to which 2ml of a mixed solution of THF and water (THF:H₂O=1:1) was then added. Then, the mixture solution was stirred at room temperature for 12 hours. After completion of the reaction, the organic layer was extracted with distilled water and ether and then purified through column chromatography (n-Hex : EA = 1:1, Rf = 0.30), thus obtaining 1000 mg (74% yield) of pure compound (11).
11 : ¹H NMR (250MHz, CDCl₃) (ppm) 7.97-7.89(m, 6H), 6.78-6.75(d, J=9.2Hz, 2H), 4.64-4.45(d, J=31.2Hz, 6H), 4.32-4.29(d, J=6.1, 2H), 4.24-4.18(t, J=7.2Hz, 2H), 3.13(s, 6H), 1.94-1.87(m, 2H), 1.70(s, 9H), 1.62(s, 6H), 0.63-0.56(m, 2H); ¹³C NMR (62.9MHz, CDCl₃) (ppm) 142.8, 139.3, 128.3, 126.0, 122.8, 111.6, 110.2, 40.5, 38.9, 25.8, 24.2; IR spectrum (neat) 3058, 2919, 2305, 1614, 1527, 1429, 1368, 1265, 1143, 892, 743 cm⁻¹; Anal. Calculated for C₃₂H₄₅N₇O₂SSi: C, 62.00; H, 7.32; N, 15.82; S, 5.17; found: C, 62.01; H, 7.43; N, 15.96; S, 5.03.

### Example 77

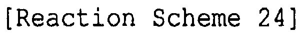

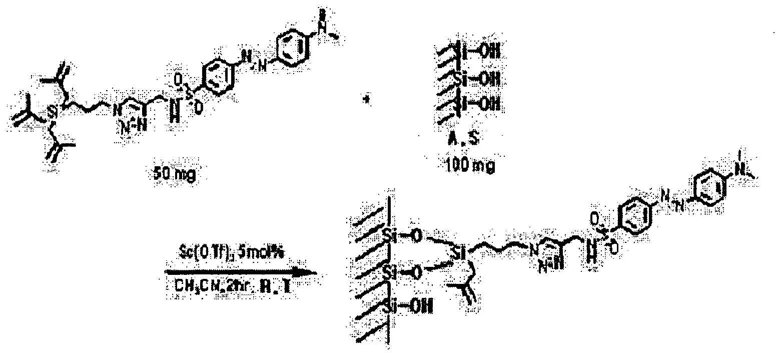

As shown in Reaction Scheme 24, 100 mg of amorphous silica and 50 mg of the dabsyl derivative (11) were added to a 5-ml V-vial, to which 4.0 mg (5 mol%) of Sc(OTf)₃ was then added. After the mixture was dissolved in 1.5 ml of acetonitrile, the vial was plugged and the solution was stirred at room temperature for 2 hours. After completion of the reaction, the solid silica, having the dabsyl group bonded thereto, was washed with 300 ml of ethanol.

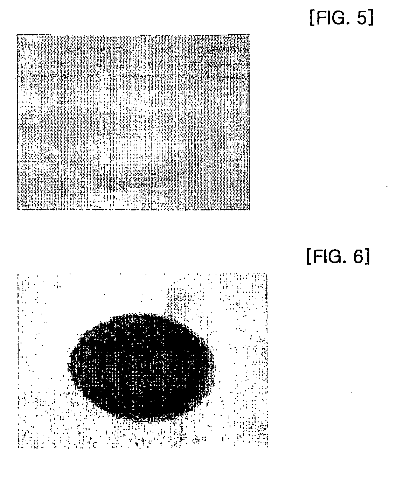

Referring to FIG. 5, unreacted amorphous silica showed a white color, whereas, in FIG. 6, the silica, which had been allowed to react with the dabsyl-trimethallyl-silane derivative (11) in the acetonitrile solvent using the Sc(OTf)₃ catalyst, showed a characteristic red color, suggesting that the dabsyl derivative was bonded to the silica surface.

### Example 78

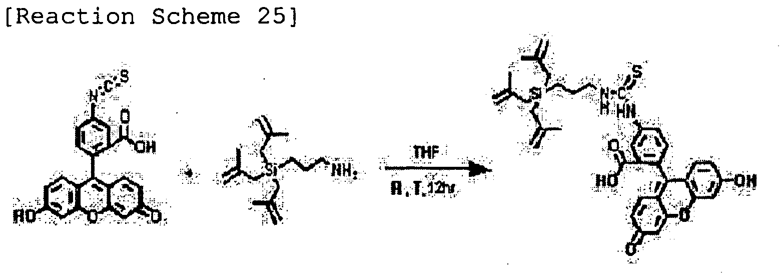

As shown on Reaction Scheme 25, FITC (fluoroscein isothiocyanate) (250 mg, 0.64 mmol) was added into a reactor which was then charged with nitrogen gas. Then, 6 ml of THF was added, and 3-aminopropyl-trimethallyl-silane (163 mg, 0.65 mmol) was slowly added. Then, the mixture solution was stirred at room temperature for 12 hours. After completion of the reaction, the organic solvent was removed and the organic layer was extracted with methylene chloride and ether. Because the resulting solid is easily quenched by light, it was allowed to react in a dark room and protected from light using aluminum foil, thus preparing a FITC-methallyl-silane derivative.
HR-MS: m/z calculated for C₃₆H₄₀N₂O₅SSi [M+Na]⁺=663.2325; found: 663.2328.

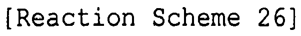

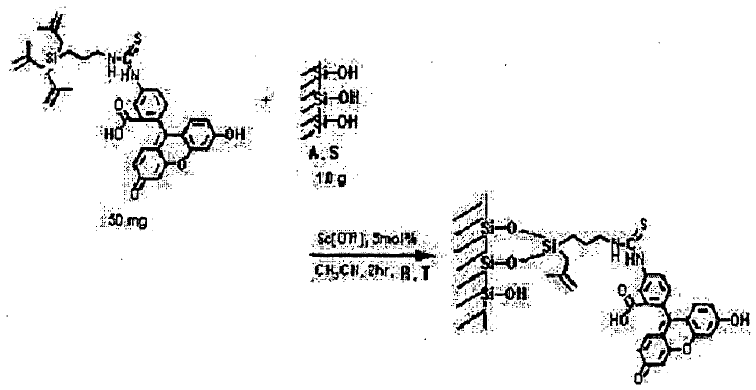

As shown in Reaction Scheme 26 above, 50 mg of said FITC-methallyl-silane derivative was added into a 5-mL V-vial. Then, 100 mg of amorphous silica, 0.285 mg (5 mol%) of Sc(OTf)₃ and 1.5 ml of acetonitrile were added thereto, and the mixture solution was stirred at room temperature for 2 hours. After completion of the reaction, the solid silica was washed clean with 300 ml of ethanol and then subjected to a fluorescence test.

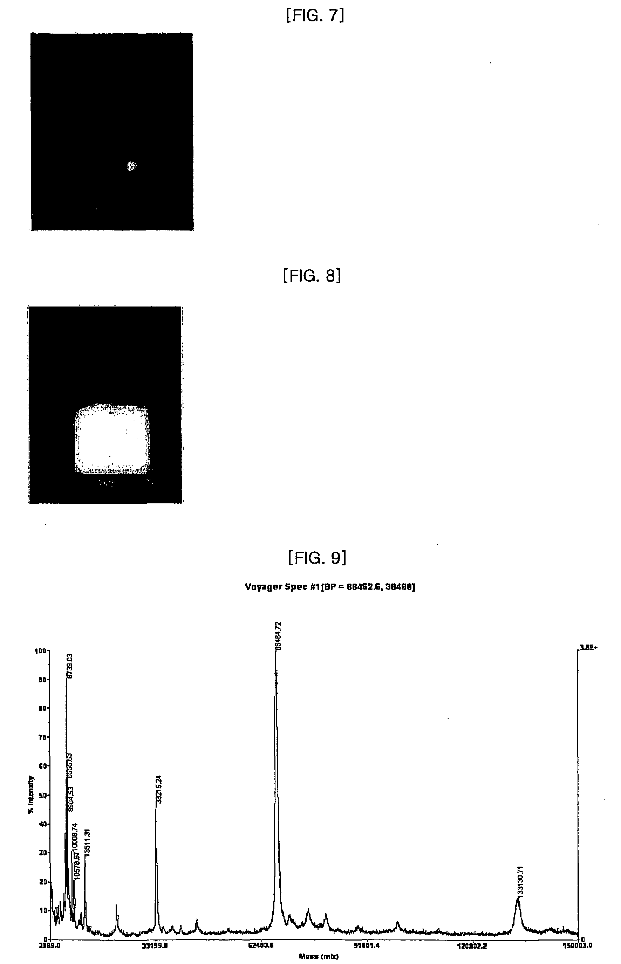

As a result, as can be seen in FIG. 7, amorphous silica, which was not subjected to any reaction, did not show fluorescence, whereas the FITC-bonded silica, which was allowed to react with the FITC-trimethallyl-silane derivative at room temperature in the acetonitrile solvent using the Sc(OTf)₃ catalyst, showed a characteristic fluorescence as shown in FIG. 8, suggesting that the FITC-derivative was bonded to the silica.

### Example 79

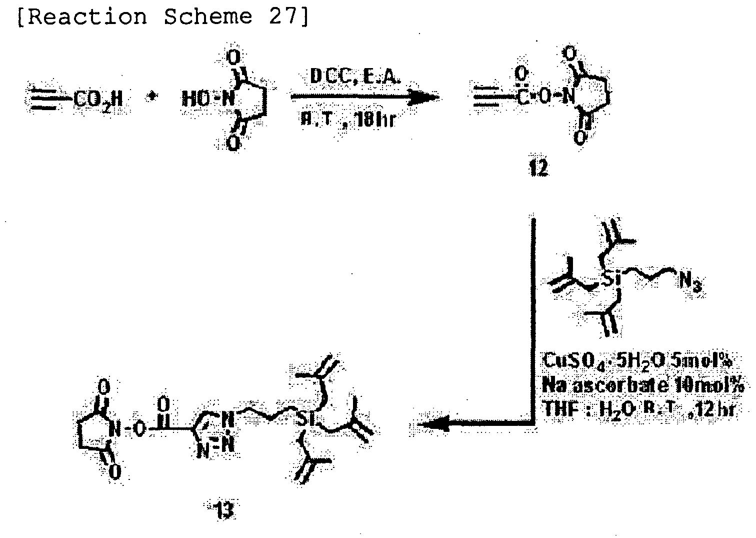

As shown in Reaction Scheme 27 above, bovine serum albumin (BSA) is a kind of protein which constitutes the basic substance of cells and consists only of amino acids. In order to connect it to trimethallyl-silane, the following succinimide-trimethallyl-silane derivative (13) was synthesized.

### Synthesis of compound 12 in Reaction Scheme 27

Propiolic acid (2.5 g, 0.022 mol) and N-hydroxy succinimide (1.55 g, 0.022 mol) were dissolved in 30 ml of dimethoxyethane. Also, 1.3-dicyclohexyl carbodiimide (DCC) (4.99 g, 0.024 mol) was dissolved in 25 ml of dimethoxyethane and slowly added to said mixture solution of propiolic acid and N-hydroxy succinimide, followed by stirring for 18 hours. After completion of the reaction, the solvent was removed using a rotary evaporator, and dicyclohexyl urea was removed through a filter. This yielded an oil-type product (12) which was then subjected to a subsequent reaction, because it was unstable, and thus could not easily be purified by column chromatography.

### Synthesis of compound 13 in Reaction Scheme 27

To the above-synthesized oil-type product (12) (1.0 g, 5.99 mmol) and 3-azidopropyl-trimethallyl-silane (1.07 g, 3.86 mmol), CuSO₄ · H₂O (98.2 mg, 0.193 mmol) and Na ascorbate (119 mg, 0.599 mmol) were added, to which 20 ml of a mixed solution of THF and water (THF:H₂O=1:1) was then added. Then, the mixture solution was stirred at room temperature for 12 hours. After completion of the reaction, the organic layer was extracted with water and ether and then purified through column chromatography (n-Hex : EA = 1 : 1, Rf = 0.35), thus obtaining N-carboxysuccinimidyl propyl trimethallyl silane (13).
13 : ¹H NMR (250MHz, CDCl₃) (ppm) 8.26(s, 1H), 4.65-4.52(d, J=30.1Hz, 6H), 4.43-4.37(t, J=7.12 2H), 2.90(s, 4H), 2.04-1.98(m, 2H), 1.71(s, 9H), 1.64(s, 6H), 0.67-0.60(m, 2H); ¹³C NMR (62.9MHz, CDCl₃) (ppm) 169.2, 142.7, 134.8, 129.2, 110.3, 100.2, 54.0, 25.8, 25.1, 24.2, 10.2; IR spectrum (neat) 3053, 2991, 2310, 1747, 1644, 1419, 1271, 1209, 1086, 968, 886; Anal. Calculated for C₂₂H₃₂N₄O₄Si: C, 59.43; H, 7.25; N, 12.60; found: C, 59.31; H, 7.37; N, 12.76.

### Example 80: Synthesis of trimethallyl-silane-immobilized bovine serum albumin (BSA)

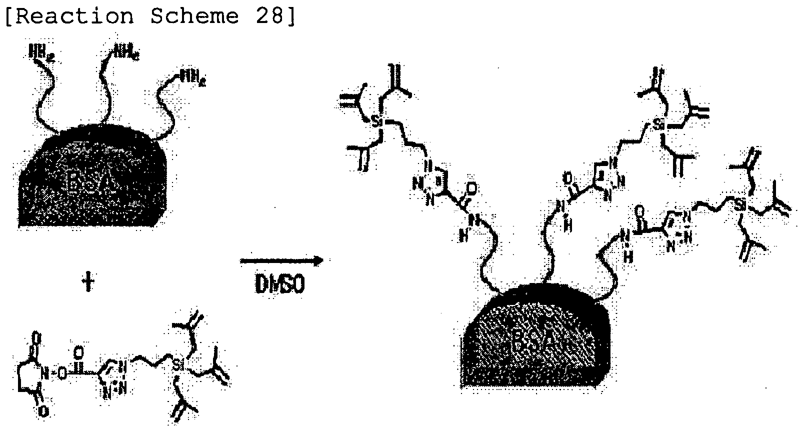

As shown in Reaction Scheme 28, 50 mg of bovine serum albumin (BSA) was dissolved in 7 ml (100 mM) of phosphate buffered solution. 10 mg of N-carboxysuccinimidylpropyl trimethallyl silane synthesized in Example 79 above was dissolved in 0.7 ml of DMSO and added to the above BSA solution, and the mixed solution was lightly vortexed. After 3 hours, an excess of unreacted N-carboxysuccinimidylpropyl trimethallyl silane was removed using Hi-trap desalting column chromatography (Amersham Biosciences), and the residue was lyophilized, thus obtaining trimethallylsilane functionalized-BSA as white powder, which was then analyzed using MALDI-TOF MASS spectrometry.

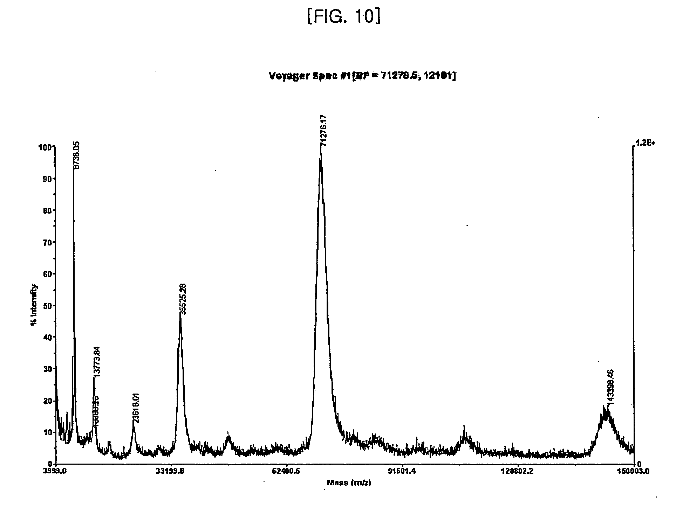

As a result, as shown in FIG. 9, the molecular weight of albumin was 66462.6 (m/z), and as shown in FIG. 10, the molecular weight of trimethallylsilane-bonded albumin was 71276.5 (m/z) corresponding to an increase of 4813.9 (m/z) compared to unreacted albumin. The molecular weight difference between the above-synthesized N-carboxysuccinimidyl propyl-trimethallyl-silane (13) (m/z=444.60) and N-hydroxysuccinimide (m/z=115.03), which was detached upon reaction with bovine serum albumin, is 329.57 (m/z).

Thus, when 4813.9 (m/z) was divided by 329.57 (m/z), it could be found that about 15 trimethallyl-silane derivatives were connected to bovine serum albumin.

### Examples 81 to 83: Synthesis of dodecyldimethylmethallyl-silane derivatives

### Example 81

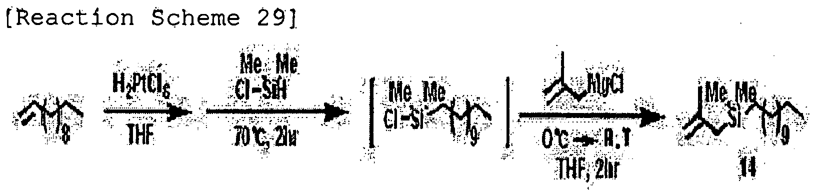

As shown in Reaction Scheme 29, a reactor was dried and then charged with nitrogen. H₂PtCl₆ (308 mg, 0.63 mmol) was added into the reactor, and 30 ml THF was added thereto. To the solution, 1-dodecene (4.3 g, 25.36 mmol) was added and chlorodimethyl-silane (2.0 g, 21.14 mmol) was slowly added, and the mixture solution was then heated from room temperature to 70 °C and stirred at that temperature for 2 hours. After completion of the reaction, 60 ml of 1.0 M methallyl magnesium chloride was added thereto, and the mixture was stirred for 2 hours. After completion of the reaction, the organic layer was extracted with NH₄Cl aqueous solution and ether and washed with saturated NaCl. The washed material was dried with anhydrous MgSO₄, and then filtered through celite to remove MgSO₄. After removing the solvent, fractional distillation was conducted to remove unreacted 1-dodecene. The residue was purified through column chromatography (n-Hex : EA = 10:1, Rf=0.80), thus obtaining 2.0 g (33% yield) of pure dodecyldimethylmethallyl-silane (14).
14 : ¹H NMR (250 MHz, CDCl₃) (ppm) 4.56-4.46(d, J=27. 7Hz, 2H), 1.97 (q, 3H), 1.27 (s, 25H), 0.52 (m, 2H); ¹³C NMR (62.9MHz, CDCl₃) (ppm) 143.3, 108.2, 33.9, 32.2, 30.0, 29.6, 27.5, 25.5, 24.1, 23.0, 15.7, 14.4, -1.8; IR spectrum (neat) 3414, 3072, 2918, 2852, 1739, 1635, 1455, 1382, 1170, 1062, 873, 792; MS m/z (% relative intensity) 282 (M⁺, 0.2), 267 (1), 227 (54), 211 (0.7), 199 (0.7), 185 (0.5), 171 (1), 157 (2), 141 (7), 127 (14), 113 (20), 99 (28), 87 (20), 73 (25), 59 (100), 43 (10); Anal. Calculated for C₁₈H₃₈Si: C, 76.51; H, 13.55; found: C, 77.04; H, 13.32.

### Example 82

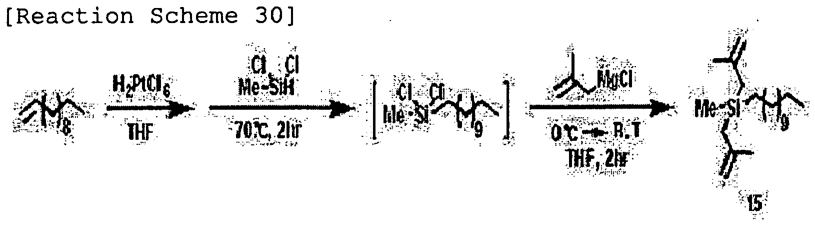

As shown in Reaction Scheme 30 above, the reaction was carried out in the same manner as the reaction for preparing the compound 14 of Reaction Scheme 29 in Example 81, except that 2.0 g (17.4 mmol) of dichloromethylsilane was used, thereby obtaining 2.6 g (51% yield) of pure dodecylmethyldimethallyl-silane (15).
15 : ¹H NMR (250MHz, CDCl₃) (ppm) 9.60-4.49 (d, J=27.3Hz, 4H), 1.72 (s, 6H), 1.58(s, 4H), 1.26(s, 20H), 0.91(t, J_{ab}=11.9Hz, J_{bc}=6.2 2H), 0.04(s, 3H); ¹³C NMR (62.9MHz, CDCl₃) (ppm) 143.8, 108.9, 34.0, 32.2, 31.9, 29.9, 29.6, 25.9, 25.6, 24.0, 23.0, 14.4, -4.2; IR spectrum (neat) 3084, 2971, 2930, 2863, 1639, 1465, 1378, 1281, 1260, 1163, 979, 876, 845; MS m/z (% relative intensity) 322 (M⁺, 0.4), 307 (0.4), 267 (24), 251 (0.5), 239 (0.3), 225 (26), 211 (2), 197 (0.5), 182 (0.4), 169 (0.4), 154 (12.3), 139 (1), 127 (3), 113 (7), 99 (100), 85 (6), 71 (10), 59 (11), 43 (6); Anal. Calculated for C₂₁H₄₂Si: C, 78.17; H, 13.12; found: C, 78.11; H, 13.32.

### Example 83

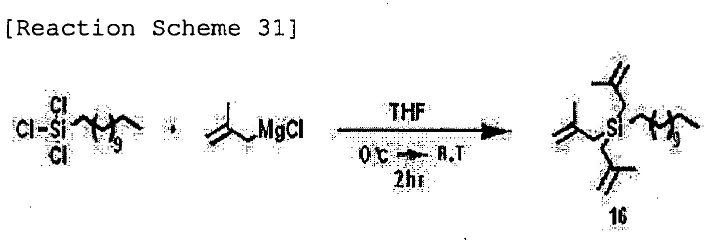

As shown in Reaction Scheme 31 above, 3.0 g (9.87 mmol) of dodecyltrimethylchloro-silane was dissolved in 20 ml of THF, to which 100 ml of 1.0 M methallylmagnesium chloride was then added. The solution was then stirred at room temperature for 2 hours. After completion of the reaction, the organic layer was extracted with NH₄Cl aqueous solution and ether and washed with saturated NaCl. The washed material was dried with anhydrous MgSO₄ and then filtered through celite to remove MgSO₄. After removing the solvent, the residue was purified through column chromatography (n-Hex : EA = 10:1, Rf=0.80), thus obtaining 5.3 g (88% yield) of pure dodecyltrimethallyl-silane (16).
16 : ¹H NMR (250MHz, CDCl₃) (ppm) 4.64-4.54(d, J=23.0Hz, 6H), 1.74(s, 9H), 1.26(s, 24H), 0.86(t, J=6.4Hz, 3H), 0.60 (t, J=7.8Hz, 2H); ¹³C NMR (62.9MHz, CDCl₃) (ppm) 143.3, 109.7, 34.1, 32.2, 30.1, 25.9, 24.3, 23.9, 23.0, 14.4, 13.5 IR spectrum (neat) 3414, 3072, 2918, 2852, 1739, 1635, 1455, 1382, 1170, 1062, 873, 792; Anal. Calculated for C₂₄H₄₆Si: C, 79.47; H, 12.78; found: C, 79.19; H, 12.95

### Examples 84 to 86

### Example 84

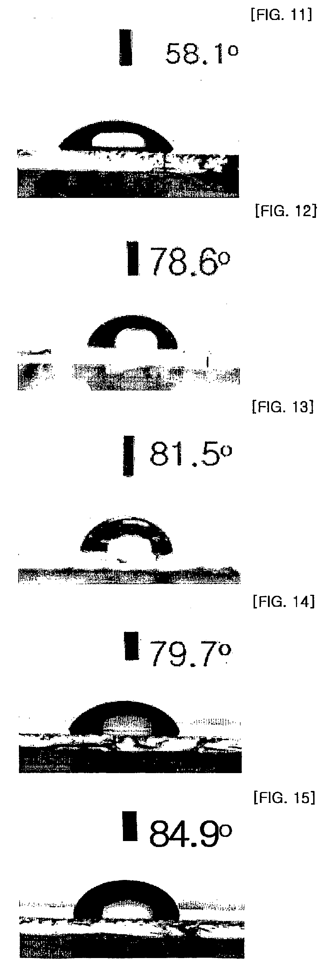

In order to covalently bond the above-synthesized various methallyl-silane derivatives to indium tin oxide (ITO) glass which is mainly used in electronic sensor or semiconductor applications, an activation step of giving the ITO glass surface -OH groups should be carried out in the following manner. H₂SO₄ and H₂O₂ are slowly mixed at a ratio of 3:1 to make a piranha solution. ITO glass is immersed in the piranha solution for about 30 minutes and then washed clean with ethanol and distilled water, thus giving the ITO glass surface hydroxyl groups (-OH). As a result of this pretreatment, the glass surface becomes hydrophilic due to the hydroxyl group thereon. As shown in FIG. 11, a water drop was allowed to fall on the glass surface, and the contact angle between the glass surface and the water drop was measured as 58.1°. The ITO glass surface treated as described above was allowed to react with a dodecyldimethylmethallyl-silane derivative as shown in Reaction Scheme 32 below.

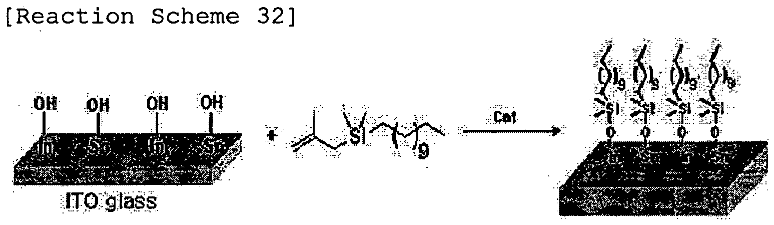

As shown in Reaction Scheme 32 above, 423 mg (1.5 mmol) of dodecyldimethylmethallylsilane (compound 14 in Reaction Scheme 29) was added to 2 mol% HCl (4 mg) in the presence of 2 ml of an ethanol solvent and then allowed to react with ITO glass for 2 hours. Also, the same amount of methallylsilane was allowed to react with ITO glass in the presence of 2 ml of acetonitrile solvent using 2 mol% Sc (OTf) ₃ (15 mg). Then, the contact angles for the two glass samples were measured and compared to each other.

As a result, in the case where the reaction was carried out using 2 mol% HCl as the acid catalyst, the glass sample showed a contact angle of 78.6°, as shown in FIG. 12, but in the case where the Sc (OTf) ₃ catalyst was used, the glass sample showed a contact angle of 81.5°as shown in FIG. 13.

Both the two ITO glass samples were shown to be hydrophobic in nature due to a dodecyl group bonded to the surface thereof, but it could be observed that the reaction using Sc(OTf)₃ was slightly more effective than when using HCl.

### Example 85

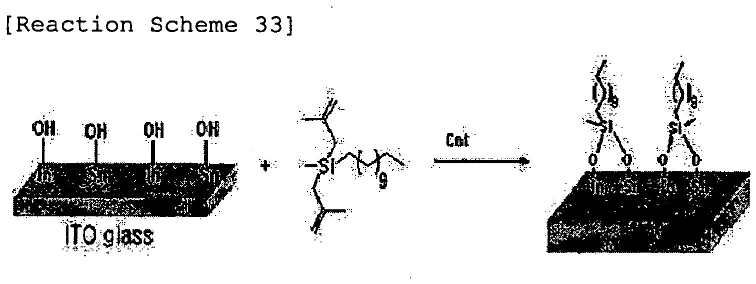

As shown in Reaction Scheme 33 above, a test for the comparison between contact angles was carried out in the same manner as in Example 82, except that 483 mg (1.5 mmol) of dodecylmethyldimethallyl-silane (compound 15 in Reaction Scheme 30) was used in place of dodecyldimethylmethallyl-silane. As a result, the use of 2 mol% HCl as the acid catalyst showed a contact angle of 79.7° as shown in FIG. 14, but the use of 2mol% Sc(OTf)₃ showed a contact angle of 84.9°, as shown in FIG. 15. This suggests that Sc(OTf) ₃ has higher activity than that of HCl.

### Example 86

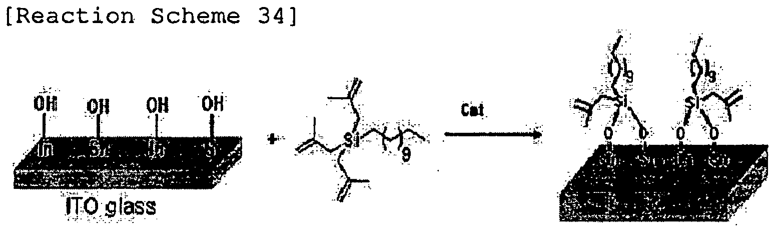

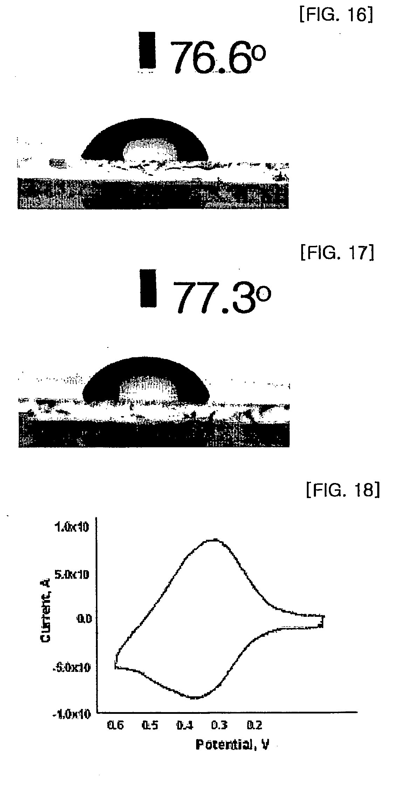

A test for the comparison of contact angles was carried out in the same manner as in Example 84, except that 544 mg (1.5 mmol) of dodecyltrimethallyl-silane (compound 16 in Reaction Scheme 31) was used in place of dodecyldimethylmethallyl-silane. As a result, the use of 2 mol% HCl showed a contact angle of 76.6°, as shown in FIG. 16, but the use of 2 mol% Sc (OTf) ₃ showed a contact angle of 77.3°, as shown in FIG. 17. This suggests that Sc(OTf) ₃ has an activity higher than that of HCl.

### Example 87

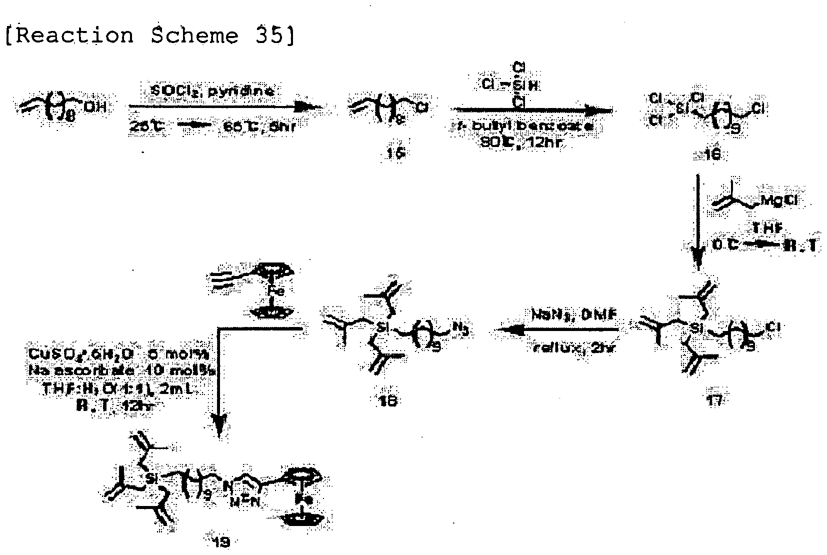

### Synthesis of compound 15 in Reaction Scheme 35

To 10-undecenyl alcohol (10 g, 58.7 mmol), pyridine (0.08 mL, 2.53 mmol) was added, SOCl₂ (4.7mL) was slowly added thereto at 25°C over about 5 minutes, and the mixture was then refluxed at 65°C for 5 hours. The reaction mixture was extracted with methylene chloride and water and then distilled, yielding 11 g (98% yield) of pure 10-undecenyl chloride (15).
15 : ¹H NMR (250MHz, CDCl₃) (ppm) 5.87-5.73(m, 1H), 5.04-4.91(t, 2H), 3.56-3.51(t, J=6.78, 2H), 2.08-2.00(q, J_{ab}=6.7Hz, J_{bc}=7.1, J_{cd}=6.9 2H), 1.82-1.71 (q, J_{ab}=6.7Hz, J_{bc}=6.8, J_{cd}=7.8, J_{de}=6.8, 2H), 1.29 (s, 12H).

### Synthesis of compound 16 in Reaction Scheme 35

Into a reactor, said trichlorosilane (5.35 mL, 53 mmol) was added and heated from room temperature to 90 °C. Then, a mixture of t-butyl perbenzoate and 10-undecenyl chloride (16 g, 26.5 mmol) was slowly added thereto and refluxed for 12 hours. Then, the reaction mixture was distilled, thus obtaining 1.5 g (90% yield) of pure 11-chloroundecyl-trichloro-silane (16).

### Synthesis of compound 17 in Reaction Scheme 35

9.5 g of 104.9 mmol of the above-prepared 11-chloroundecyl-trichloro-silane (16) was allowed to react with methallyl-magnesium chloride at 0 °C, and the reaction mixture was then heated to room temperature and stirred at that temperature for 2 hours. After completion of the reaction, the organic layer was extracted with saturated NH4Cl aqueous solution and ether and then purified using column chromatography (n-Hex : EA = 20:1, Rf - 0.74), thus obtaining 4.3 g (92% yield) of pure 11-chloroundecynyl-trimethallyl-silane (17).
17 : ¹H NMR (250MHz, CDCl₃) (ppm) 4.64-4.58(d, J=17.5 6H), 3.56-3.50(t, J=13.5, 2H), 1.74(s, 9H), 1.67(s, 6H), 1.27(s, 18H), 0.66-0.60(m, 2H).

### Synthesis of compound 18 in Reaction Scheme 35

In a reactor, to 1000 mg (2.61 mmol) of the above-prepared 11-chloroundecyl-trimethallyl-silane (17) and 340 mg (5.22 mmol) of sodium azide, dimethylformamide (DMF) was added, and the reactor was charged with nitrogen gas. Then; the mixture solution was refluxed for 2 hours. After completion of the reaction, distilled water and ether were used to remove dimethylformamide (DMF) and to extract the organic layer. The organic layer was dried with anhydrous MgSO₄ and then filtered through celite. The filtrate was purified using column chromatography (n-Hex : EA = 10:1, Ref 0.6), thus obtaining 905 mg (89% yield) of pure 11-azidoundecyl-trimethallyl-silane (18).
18 : ¹H NMR (250MHz, CDCl₃) (ppm) 4.64-4.58 (d, J=17.5 6H), 3.28-3.23(t, J=6.9, 2H), 1.74 (s, 9H), 1.57 (s, 6H), 1.27 (s, 18H), 0.66-0.60(m, 2H).

### Synthesis of compound 19 in Reaction Scheme 35

To 900 mg (2.31 mmol) of the above-prepared 1-azidoundecyl-trimethallylsilane (18) and 533.6 mg (2.54 mmol) of ethynyl ferrocene, 2 ml of a mixed solution of THF and water (THF: H₂O=1:1) was added, to which CuSO₄ · H₂O (29 mg, 0.116 mmol) and Na ascorbate (45.8 mg, 0.231 mmol) were then added. Then, the mixture solution was stirred at room temperature for 12 hours. After completion of the reaction, the organic layer was extracted with distilled water and ether and then purified through column chromatography (n-Hex : EA = 1:1, Rf= 0.5), thus obtaining 1360 mg (98% yield) of pure ferrocene derivative (19).
21 : HR-MS: m/z calculated for C₁₅H₂₉NSi [M+H]⁺=599.3359 found: 599.3365.

### Example 88

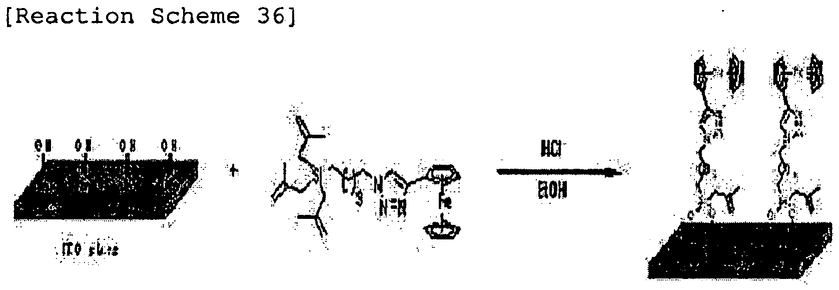

In order to apply the ferrocene derivative (compound 19 in Reaction Scheme 35) synthesized in Example 87 above to ITO (Indium Tin Oxide) glass, H₂SO₄ and H₂O₂ were slowly mixed at a ratio of 3:1 to make a piranha solution.

ITO glass was immersed in the piranha solution for about 30 minutes, and then washed clean with ethanol and distilled water, thus activating the ITO glass surface with an hydroxyl group (-OH). As shown in Reaction Scheme 36, to the ITO glass pretreated with the piranha solution, 500 mg (0.834 mmol) of the ferrocene derivative (compound 19 in Reaction Scheme 35) was added, to which 9 mg (50 mol%) of HCl as an acid catalyst and 2 ml of ethanol were added.
The mixture was shaken for 2 hours and then tested using cyclic voltammetry.
The test results are shown in FIG. 18.

As shown in FIG. 18, from the results of the cyclic voltammetry test, it was determined that an oxidation-reduction reaction occurred. This suggests that the ferrocene derivative was immobilized on the ITO glass.

Although the present invention has been described only with respect to the above examples, those skilled in the art will appreciate that various modifications, additions and substitutions are possible, without departing from the scope and spirit of the invention as disclosed in the accompanying claims.

### [Industrial Applicability]

As described above, according to the present invention, a desired organic group can be introduced onto the surface of inorganic materials, particularly solid silica or ITO glass, which are used in the electronic industry and sensor applications. Accordingly, the present invention is very useful for improving the mechanical and chemical properties of these materials.

## Claims

1. A method for modifying the surface of an inorganic material, comprising the steps of:
1) purifying an organosilane compound, having allyl or an allyl derivative and represented by Formula 1 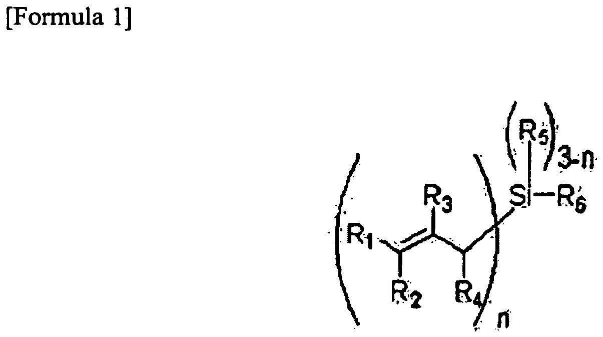 wherein R₁ to R₅ are each individually H or a linear or branched C₁-C₃₀ alkyl group, R₆ is a linear or branched C₁-C₁₈ alkyl group, a linear or branched C₁-C₃₀ aliphatic unsaturated hydrocarbon, a C₁-C₃₀ ring compound, a C₁-C₃₀ aromatic ring compound, or a linear or branched C₁-C₁₈ alkyl group or linear or branched C₁-C₁₈ aliphatic unsaturated hydrocarbon containing at least one functional group selected from the group consisting of halogen, azide, amine, ketone, ether, amide, ester, triazole and isocyanate, and n is an integer ranging from 1 to 3; and
2) mixing an inorganic material with said purified organosilane compound, an acid and a solvent.

2. The method of claim 1, wherein the inorganic material is solid silica or ITO glass.

3. The method of any one of the preceding claims, wherein said purification step 1) is performed using column chromatography.

4. The method of any one of the preceding claims, wherein said mixing step 2) is carried out at a temperature of 10-30 °C.

5. The method of any one of the preceding claims, wherein the acid is any one or more selected from the group consisting of HCl, H₂SO₄, HNO₃, p-CH₃C₆H₄SO₃H, Sc(OTf)₃, In(OTf)₃, Yb(OTf)₃ and Cu(OTf)2.

6. The method of any one of the preceding claims, which further comprises, after the step 2), a step of stirring the mixture for 5 minutes to 5 hours.

7. The method of any one of the preceding claims, which further comprises, before the step 1) or after the step 2), a step of introducing an organic group into said R₆.

8. The method of claim 7, wherein the organic group is any one or more selected from the group consisting of functional organic compounds, organometallic compounds, amino acids, proteins, chiral compounds and natural compounds.

## Patentansprüche

1. Verfahren zum Modifizieren der Oberfläche eines anorganischen Materials, umfassend die Schritte von:
1) Reinigen einer Organosilanverbindung, welche ein Allyl oder ein Allylderivat aufweist und durch Formel 1 dargestellt wird 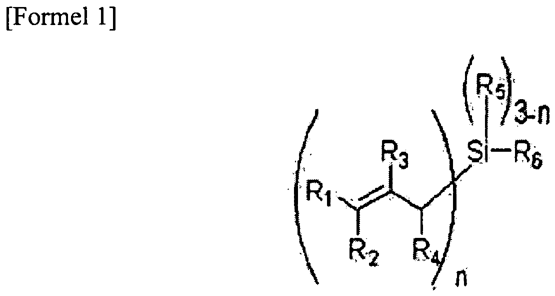 wobei R₁ bis R₅ jeweils unabhängig voneinander H oder eine lineare oder verzweigte C₁-C₃₀-Alkylgruppe sind, R₆ eine lineare oder verzweigte C₁-C₁₈-Alkylgruppe, ein linearer oder verzweigter aliphatischer, unsättigter C₁-C₃₀-Kohlenwasserstoff, eine C₁-C₃₀-Ringver-bindung, eine aromatische C₁-C₃₀-Ringverbindung oder eine lineare oder verzweigte C₁-C₁₈-Alkylgruppe oder ein linearer oder verzweigter aliphatischer, ungesättigter C₁-C₁₈-Kohlenwasserstoff mit mindestens einer funktionellen Gruppe ausgewählt aus der Gruppe, bestehend aus Halogen, Azid, Amin, Keton, Ether, Amid, Ester, Triazol und Isocyanat ist, und n ein ganze Zahl im Bereich von 1 bis 3 ist; und
2) Mischen eines anorganischen Materials mit der gereinigten Organosilanverbindung, einer Säure und einem Lösungsmittel.

2. Verfahren nach Anspruch 1, wobei das anorganische Material festes Silikamaterial

3. Verfahren nach einem der vorhergehenden Ansprüche, wobei der Reinigungsschritt 1) mittels Säulenchromatographie erfolgt.

4. Verfahren nach einem der vorhergehenden Ansprüche, wobei der Schritt des Mischens 2) bei einer Temperatur von 10 bis 30 °C durchgeführt wird.

5. Verfahren nach einem der vorhergehenden Ansprüche, wobei die Säure eine oder mehrere ausgewählt aus der Gruppe, bestehend aus HCl, H₂SO₄, HNO₃, p-CH₃C₆H₄SO₃H, Sc(OTf)₃, In(OTf)₃, Yb(OTf)₃ und Cu(OTf)₂ ist.

6. Verfahren nach einem der vorhergehenden Ansprüche, welches ferner nach dem Schritt 2) einen Schritt umfasst, bei dem die Mischung für 5 Minuten bis 5 Stunden gerührt wird.

7. Verfahren nach einem der vorhergehenden Ansprüche, welches ferner vor dem Schritt 1) oder nach dem Schritt 2) einen Schritt umfasst, bei dem eine organische Gruppe in R₆ eingeführt wird.

8. Verfahren nach Anspruch 7, wobei die organische Gruppe eine oder mehrere ausgewählt aus der Gruppe, bestehend aus funktionellen organischen Verbindungen, organometallischen Verbindungen, Aminosäuren, Proteinen, chiralen Verbindungen und natürlichen Verbindungen ist.

## Revendications

1. Procédé de modification de la surface d'un matériau inorganique, qui comprend les étapes consistant à :
1) purifier un composé organosilane, ayant un allyle ou un dérivé allyle et représenté par la formule 1 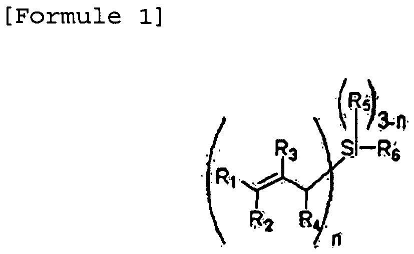 dans laquelle R₁ à R₅ sont chacun individuellement H ou un groupe alkyle en C₁-C₃₀ linéaire ou ramifié, R₆ est un groupe alkyle en C₁-C₁₈ linéaire ou ramifié, un hydrocarbure aliphatique insaturé en C₁-C₃₀ linéaire ou ramifié, un composé cyclique en C₁-C₃₀, un composé cyclique aromatique en C₁-C₃₀, ou un groupe alkyle en C₁-C₁₈ linéaire ou ramifié ou un hydrocarbure aliphatique insaturé en C₁-C₁₈ linéaire ou ramifié contenant au moins un groupe fonctionnel choisi dans le groupe constitué par un halogène, un azide, une amine, une cétone, un éther, un amide, un ester, un triazole et un isocyanate, et n est un nombre entier dans la plage de 1 à 3 ; et
2) mélanger un matériau inorganique avec ledit composé organosilane purifié, un acide et un solvant.

2. Procédé selon la revendication 1, dans lequel le matériau inorganique est une silice solide ou un verre ITO.

3. Procédé selon l'une quelconque des revendications précédentes, dans lequel ladite étape de purification 1) est réalisée en utilisant la chromatographie sur colonne.

4. Procédé selon l'une quelconque des revendications précédentes, dans lequel ladite étape de mélange 2) est réalisée à une température de 10 à 30°C.

5. Procédé selon l'une quelconque des revendications précédentes, dans lequel ledit acide est un ou plusieurs éléments quelconques choisis dans le groupe constitué par HCl, H₂SO₄, HNO₃, P-CH₃C₆H₄SO₃H, Sc(OTf)₃, In(OTf)₃, Yb(OTf)₃ et Cu(OTf)₂.

6. Procédé selon l'une quelconque des revendications précédentes, qui comprend en outre, après l'étape 2), une étape consistant à agiter le mélange pendant 5 minutes à 5 heures.

7. Procédé selon l'une quelconque des revendications précédentes, qui comprend en outre, avant l'étape 1) ou après l'étape 2), une étape d'introduction d'un groupe organique dans ledit R₆.

8. Procédé selon la revendication 7, dans lequel le groupe organique est un ou plusieurs éléments quelconques choisis dans le groupe constitué par des composés organiques fonctionnels, des composés organométalliques, des acides aminés, des protéines, des composés chiraux et des composés naturels.
